# FASCICULE DE BREVET EUROPEEN

(11) **EP 3 111 154 B1**
(45) Date de publication et mention de la délivrance du brevet: **10.11.2021**
(21) Numéro de dépôt: 15741321.2
(22) Date de dépôt: 09.02.2015
(51) Int. Cl.: F28F 27/00, F28D 20/00, H02J 3/28

(54) **DISPOSITIF POUR PILOTER AU MOINS UN SOUS-ENSEMBLE APTE A TRANSFORMER DE L'ÉNERGIE ÉLECTRIQUE ET A LA STOCKER SOUS FORME THERMIQUE, SYSTÈME ET PROCÉDÉ ASSOCIÉS**
VORRICHTUNG ZUM BETREIBEN WENIGSTENS EINER TEILVORRICHTUNG ZUR UMFORMUNG ELEKTRISCHER ENERGIE UND DEREN SPEICHERUNG IN THERMISCHER FORM, SOWIE ZUGEHÖRIGES SYSTEM UND VERFAHREN
DEVICE FOR DRIVING AT LEAST ONE SUBASSEMBLY CAPABLE OF TRANSFORMING ELECTRICAL ENERGY AND OF STORING SAID ENERGY IN THERMAL FORM, ASSOCIATED SYSTEM AND METHOD

(30) Priorité: 27.02.2014 FR 1400496
(43) Date de publication de la demande: 04.01.2017
(73) Titulaire: Ergylink, 92300 Levallois-Perret (FR)
(72) Inventeur: GILBERT, Jérôme, 92300 Levallois Perret (FR)
(86) Numéro de dépôt international: PCT/IB2015/050973
(87) Numéro de publication internationale: WO 2015/128762

(56) Documents cités:
- DE-A1-102011 001 273
- DE-A1-102011 078 656
- DE-A1-102011 080 830
- US-A1- 2012 235 478
- None

## Description

### Domaine technique

L'invention se situe dans le domaine de la gestion des réseaux d'énergie électrique.

### Etat de la technique antérieure

Les réseaux de distribution électriques modernes sont de plus en plus complexes comme le montre le brevet FR2976415. Ils comprennent notamment une part de plus en plus importante de production variable et des infrastructures de distribution proches de la saturation face à une demande en constante augmentation. La part de productions intermittentes d'origine solaire ou éolienne par exemple croit continument dans le mix énergétique de la plupart des pays engagés dans une démarche de transition énergétique vers davantage d'énergie renouvelable. Or la progression de la part issue des sources d'énergie renouvelable à production intermittente dans le mix énergétique au delà de 30% nécessite la mise en œuvre de solutions pour stocker l'énergie produite à des moments où elle est excédentaire par rapport à la demande pour la restituer aux moments où elle est déficitaire. Parmi les solutions de stockage envisagées, le stockage disséminé sous forme thermique est particulièrement avantageux notamment en ce que les pertes de transformation et de transport ne sont subies qu'une seule fois. Dans cette catégorie de moyens de stockage de l'énergie, le parc installé d'appareils de production d'eau chaude sanitaire à accumulation constitue une capacité de stockage considérable dans la plupart des pays. Par exemple il existe en France environ 14,5 millions de chauffe-eau en service ce qui représente une capacité de stockage de plus de 20 millions de MWh électriques soit environ 50 % de la production hydroélectrique annuelle du pays. Le pilotage de ce type d'appareil se fait traditionnellement en asservissant leur mise en marche et leur mise à l'arrêt aux conditions tarifaires de l'électricité. Le cas le plus connu étant l'asservissement du fonctionnement d'un chauffe eau-électrique au tarif heures creuses/ heures pleines. Ainsi, les solutions techniques mises en œuvre pour piloter ces appareils dans les installations terminales sont imbriquées avec les solutions de gestion tarifaire comme le montre le brevet FR2947396 et ceci dans le cadre de plages horaires fixes précisées dans les conditions tarifaires. Cette manière de piloter les moyens de stockage de l'énergie sous forme thermique dans les réseaux de distribution électrique existants n'est pas pleinement satisfaisante en ce qu'elle ne permet pas de prendre en compte dans un temps court la réalité des aléas de production, en particulier ceux provenant des sources à production intermittente. On connait le document DE102011080830 A1 qui divulgue le préambule de la revendication 1, et qui divulgue des solutions basées sur l'utilisation d'au moins un moyen de stockage d'énergie piloté par un dispositif de contrôle-commande qui met en marche ou à l'arrêt des charges et/ou des sources d'énergie de manière classique, c'est-à-dire directement en fonction d'informations reçues. On connait aussi les documents DE102011001273 A1, DE102011078656 A1 et US20120235478 A1 qui illustrent l'arrière-plan technologique de l'invention. Cette invention entre dans le cadre général dit des réseaux électriques intelligents (« smart grid » en langue anglaise).

### Exposé de l'invention

Le but de la présente invention est de remédier au moins partiellement aux problèmes évoqués précédemment en proposant un dispositif selon la revendication 1, un système selon la revendication 11 et un procédé selon la revendication 27.

L'un des avantages de l'invention sur les solutions connues de l'homme du métier est que la quantité d'énergie électrique consommée est connue indépendamment du système de comptage d'énergie de l'installation terminale concernée. Il devient ainsi possible par exemple de stocker de l'énergie électrique dans des cadres contractuel et économique distincts de ceux de la fourniture d'énergie pour les autres usages. Ceci est rendu possible par la capacité de l'invention à permettre la compensation de la consommation d'énergie relative à sa mise en œuvre dans le comptage général et dans la facturation correspondante de l'installation terminale. L'invention permet de stocker de l'énergie électrique à tout moment selon les besoin du réseau électrique et d'en gérer automatiquement les répercussions sur la facturation associée. Le découplage rendu possible entre la comptabilisation de la consommation globale d'une installation et la consommation résultant de la mise en œuvre de l'invention à l'intérieur de cette installation permet en outre l'offre d'un service de fourniture d'eau chaude et/ou de chaleur d'origine électrique séparé de celui de la fourniture d'électricité proprement dite. Un autre avantage de l'invention par rapport aux solutions comprises dans l'état de la technique est son faible besoin de bande passante pour la transmission des consignes. En effet, la transmission d'une seule consigne suffit pour la fourniture d'une quantité d'énergie électrique donnée. La réception de la consigne par le dispositif conditionne le début de la fourniture d'énergie. L'arrêt de la fourniture d'énergie étant géré localement par le dispositif lorsque la quantité d'énergie prévue a été consommée. La bande passante nécessaire est encore plus réduite en ce que les quantités importantes d'énergie à stocker dans un réseau électrique supposent la mise en service d'un très grand nombre de systèmes selon l'invention. Il est ainsi possible d'émettre la consigne en diffusion générale dans une ou plusieurs branches du réseau de télécommunication associé à la mise en œuvre de l'invention. La transmission d'une seule commande peut ainsi déclencher la consommation d'une quantité prédéterminée importante d'énergie électrique cumulant la consommation d'une pluralité d'installations comprenant un ou plusieurs systèmes selon l'invention.

Il est prévu dans le dispositif selon l'invention que la quantité d'énergie électrique fournie à l'au moins un sous-ensemble apte à transformer de l'énergie électrique et à la stocker sous forme thermique, soit estimée à partir de la mesure du temps pendant lequel l'énergie électrique est fournie à une puissance prédéterminée, à l'au moins un sous-ensemble apte à transformer de l'énergie électrique et à la stocker sous forme thermique. La puissance de la charge pilotée peut être prédéterminée dans le dispositif par tout moyen tel que par exemple par construction en usine dans le cas des systèmes selon l'invention formant un appareil complet. La puissance de la charge peut aussi être réglée ou faire l'objet d'une étape d'apprentissage lors de l'installation d'un dispositif selon l'invention pour le pilotage d'une charge de puissance externe. Cette variante de mise en œuvre de l'invention est avantageuse dans le cas où les moyens pour transformer l'énergie électrique sous forme thermique ont un fonctionnement à puissance constante lorsqu'ils sont alimentés à tension constante. Ainsi, mesurer l'énergie consommée par la charge pilotée revient compter le temps de fonctionnement de cette charge. Un coefficient de proportionnalité permet le passage bijectif de la quantité de temps à la quantité d'énergie. Des raffinements visant à garantir et/ou à améliorer la précision de la conversion temps-énergie peuvent être rendus nécessaires pour avoir le droit d'utiliser l'invention dans le cadre de transactions économiques. Il est ainsi prévu d'étalonner le coefficient de conversation temps-énergie en usine avec un stockage du résultat de l'étalonnage dans une mémoire non volatile du dispositif, ceci pour compenser la tolérance insuffisamment précise sur la puissance unitaire des moyens pour transformer l'énergie électrique sous forme thermique. Il est également prévu de compenser la possible variation de la puissance unitaire des moyens pour transformer l'énergie électrique entre un démarrage à froid et la température atteinte en régime établi.

Il est aussi prévu que l'estimation de la quantité d'énergie électrique fournie à l'au moins un sous-ensemble apte à transformer de l'énergie électrique et à la stocker sous forme thermique tienne compte de la tension d'alimentation de l'au moins une charge électrique de puissance. Ce raffinement permet de tenir compte du fait que la tension d'alimentation du réseau électrique peut ne pas être toujours à sa tension nominale qui est de 230 V en Europe et de 110 V en Amérique du nord. Ainsi le coefficient de correspondance entre le temps et l'énergie est automatiquement modifié de manière approprié pour que la conversion reste dans la classe de précision souhaitée à l'intérieur d'une plage de variation donnée de la tension d'alimentation. Dans le cas du pilotage par le dispositif d'une charge de puissance dont l'alimentation peut être interrompue par un thermostat ou par tout autre composant ou sous-ensemble de commande intermédiaire, le dispositif tiendra avantageusement compte de la tension d'alimentation de la charge de puissance pour interrompre ou reprendre le comptage du temps de fonctionnement de la charge dans le cadre de l'évaluation de la quantité d'énergie électrique fournie. Par exemple, un simple pont diviseur ou encore un optocoupleur alimenté en parallèle avec la charge de puissance permettent au microcontrôleur embarqué dans le dispositif de détecter si la charge est réellement alimentée ou non selon que la tension du réseau est présente ou non à ses bornes. Lorsque le même microcontrôleur est utilisé pour la mise en œuvre de l'invention et pour réaliser par exemple une régulation de température par commande de la charge de puissance en tout ou rien, alors l'interruption ou la reprise du comptage du temps de fonctionnement se fait de manière programmatique dans le logiciel exécuté par le microcontrôleur du dispositif.

Il est aussi prévu dans le dispositif selon l'invention que la quantité d'énergie électrique fournie à l'au moins un sous-ensemble apte à transformer de l'énergie électrique et à la stocker sous forme thermique, soit calculée à partir de la mesure de la puissance consommée par ledit sous-ensemble apte à transformer de l'énergie électrique et à la stocker sous forme thermique, pendant le temps durant lequel l'énergie électrique lui est fournie. Cette variante de mise en œuvre intègre un sous-ensemble de mesure de puissance prenant en compte le courant circulant dans la charge et sa tension d'alimentation.

Il est prévu que le dispositif comprenne en outre des premiers moyens pour piloter des premiers moyens pour transformer l'énergie électrique sous forme thermique par effet joule, et des seconds moyens pour piloter des seconds moyens pour transformer l'énergie électrique sous forme thermique, lesdits premiers moyens pour transformer l'énergie électrique sous forme thermique ayant une puissance électrique supérieure auxdits seconds moyens, lesdits premier et second moyens étant pilotable séparément et/ou conjointement. Lesdits premiers et seconds moyens pour transformer l'énergie électrique sous forme thermique étant compris dans l'au moins un sous-ensemble apte à transformer de l'énergie électrique et à la stocker sous forme thermique selon l'invention. Il est prévu que lesdits premiers et seconds moyens pour transformer l'énergie électrique sous forme thermique soient mis en œuvre sous forme de sous-ensembles physiquement séparés agencés pour additionner leurs capacités ou au sein d'un même sous-ensemble physique. Par exemple il peut s'agir du montage en série dans l'installation de production d'eau chaude d'un bâtiment d'un cumulus classique où l'eau est chauffée par une résistance et d'un chauffe-eau à accumulation où l'eau est chauffée par un groupe thermodynamique. Il est également prévu qu'il puisse s'agir d'un appareil combinant ces deux moyens de chauffage d'un même volume de matériau destiné au stockage de la chaleur. En effet, le supplément de coût et d'encombrement occasionné par l'ajout d'une résistance dans un appareil à chauffage thermodynamique sont faibles. Cette combinaison de moyens de chauffage offre la possibilité par exemple d'utiliser un moyen de chauffage à haut rendement dans les conditions normales d'utilisation tout en offrant ponctuellement une plus grande capacité de consommation de puissance électrique pour charger davantage le réseau électrique lorsque c'est nécessaire à son équilibrage.

Il est prévu que le dispositif comprenne en outre des moyens pour recevoir au moins une consigne transmise par des moyens de commande à distance. Il est prévu par exemple que le dispositif comprenne un sous-ensemble de réception d'ordres de télécommande du système de gestion de la tarification de l'électricité, par exemple en France un récepteur TCFM à 175Hz ou 188 Hz ou un récepteur CPL compatible « Linky » (Courants Porteurs en Ligne). Il est aussi prévu d'intégrer dans le dispositif un sous-ensemble de réception ou d'émission-réception radiofréquence ou CPL, en lien direct ou par l'intermédiaire d'une passerelle Internet locale, avec une infrastructure de communication dite « M2M » (de machine à machine) et/ou « IoT » (Internet des Objets).
L'invention est en outre particulièrement économe en bande passante en ce que seule est nécessaire la transmission d'une consigne de mise en marche de la charge électrique pilotée par le dispositif pour consommer une quantité d'énergie prédéterminée. Un système de communication unidirectionnel adressant simultanément une pluralité de destinataires est suffisant pour mettre en œuvre efficacement l'invention. La consigne peut en effet être réduite à un ordre binaire sans paramètre associé. Dans ce cas cet ordre simple commande directement la mise en marche de la charge électrique pour consommer un nombre entier de kilowattheure prédéterminé. La mise à l'arrêt de la charge électrique est gérée localement par le dispositif lorsque la quantité d'énergie prédéterminée depuis la mise en marche a été consommée. Ceci est particulièrement avantageux en ce que cela libère le système de contrôle d'avoir à connaitre la puissance unitaire de la charge pilotée par chaque dispositif adressé et d'avoir à gérer les dispositifs individuellement. Il est prévu de raffiner la mise en œuvre de l'invention en faisant coexister des commandes associées à plusieurs paliers de quantité d'énergie prédéterminée. Par exemple une commande de stockage de 1 KWh, de 2 KWh et de 5 KWh. Il n'est en effet pas souhaitable de descendre en dessous de l'unité des index de comptage des compteurs d'énergie des l'installation, qui est généralement de 1 KWH. Il n'est pas souhaitable non plus d'avoir des consignes de stockage de quantités prédéterminées d'énergie trop élevées car le risque d'arriver aux limites de la capacité de stockage avant d'avoir effectivement consommé la quantité prédéterminée d'énergie prévue serait préjudiciable au client. En pratique, pour des appareils d'une puissance unitaire généralement comprise entre 1 et 3 KW, des commandes de consommation/stockage de 1 ou 2 KWh sont un bon compromis entre un temps de fonctionnement compris entre une trentaine de minutes et deux heures. Ceci sachant que le temps de chauffe nominal d'un chauffe-eau électrique standard partant d'une eau à la température ambiante est généralement de l'ordre de 4 heures quelle que soit sa capacité (la puissance électrique du corps de chauffe de chaque modèle est en général calculée pour obtenir un temps de chauffe de l'ordre de 4 heures pour amener 100% du volume d'eau qu'il contient à la température de consigne). Il est aussi prévu de transmettre de manière explicite en tant que paramètre de la commande, la valeur de la quantité d'énergie prédéterminée à stocker lorsque l'invention est adossée à un système de télécommunication sophistiqué le permettant. Les commandes groupées simultanées d'un grand nombre de dispositifs de différentes puissances sont ainsi possibles. Ces caractéristiques de l'invention permettent aussi de réduire les temps de latence dans le réseau électrique et d'absorber rapidement des surplus importants de production électrique imprévue venant notamment de sources à production intermittente.
Il est aussi prévu que le dispositif reçoive et interprète de manière appropriée au moins une autre consigne différente de l'au moins une consigne pour déclencher la fourniture d'une quantité prédéterminée d'énergie électrique. L'au moins une autre consigne étant transmise par des moyens de commande à distance et/ou par des systèmes de gestion avantageusement identiques à ceux mis en œuvre pour transmettre l'au moins une consigne pour déclencher la fourniture d'une quantité prédéterminée d'énergie électrique. Il s'agit par exemple de consignes pour asservir l'état des charges pilotées à des changements d'états tarifaires de l'électricité, et/ou pour commander la mise en marche ou la mise à l'arrêt des charges de manière spécifique, et/ou pour délester les charges de puissance dans les appareils, par exemple dans le cas où la quantité d'énergie consommée dans un réseau électrique excède la quantité d'énergie produite.

Il est prévu que le dispositif comprenne en outre des moyens pour recevoir au moins une information transmise par ledit compteur d'énergie électrique derrière lequel il est raccordé. Il s'agit par exemple d'une capacité à recevoir des informations de la sortie dite « télé-information client » des compteurs électroniques déployés en France ou de tous moyens équivalents permettant à des compteurs d'énergie électrique de transmettent des informations à des appareillages externes. Par exemple ceux utilisés en Allemagne qui sont basés sur la norme IEC62056-21 exploitant une liaison infrarouge, ou encore une connexion USB, une connexion filaire propriétaire, optique, radiofréquence, CPL etc. Cette information est avantageusement exploitée par le dispositif selon l'invention pour piloter de manière classique l'au moins un sous-ensemble apte à transformer de l'énergie électrique et à la stocker sous forme thermique dans le cadre d'un fonctionnement de base récurrent, par exemple en heures creuses. Cette information peut aussi être utilisée pour étalonner le dispositif selon l'invention en fonction de la puissance mesurée par le compteur lorsque la charge de puissance est activée et/ou de la quantité de puissance qui disparait de la quantité totale mesurée lorsque la charge est désactivée. L'information transmise par le compteur est également exploitable en tant que moyen de commande à distance du dispositif par le système de gestion du réseau électrique, par exemple selon le procédé décrit dans le brevet FR1301944.
Il est aussi prévu que l'information transmise par ledit compteur d'énergie électrique soit une information binaire issue de l'état d'une sortie de contacts d'un relais, sortie normalement prévue dans le compteur pour asservir le fonctionnement d'un chauffe-eau à accumulation à des paliers tarifaires avantageux.

Il est prévu que le dispositif comprenne en outre des moyens pour déterminer la quantité d'énergie extraite de l'au moins un sous-ensemble apte à transformer de l'énergie électrique et à la stocker sous forme thermique lors de son utilisation. Il s'agit de déterminer la quantité d'énergie extraite des moyens de stockage par exemple dans le cadre de la fourniture d'un service de fourniture d'eau chaude et/ou de chauffage et/ou de refroidissement. Il est prévu que la quantité d'énergie extraite des moyens de stockage soit calculée et/ou mesurée au sein du dispositif à partir d'informations issues d'au moins un capteur et/ou un compteur. Le comptage de l'énergie thermique extraite des moyens de stockage peut par exemple se faire grâce à une équation reposant sur la prise en compte de la différence de températures de deux sondes prise à l'entrée eau froide et à la sortie eau chaude, et du volume d'eau qui passe dans un mesureur hydraulique.

Il est prévu que le dispositif comprenne en outre des moyens pour recevoir au moins une information en rapport avec le volume d'eau extrait, et/ou avec la température de l'eau extraite, et/ou avec la température de l'eau entrante, de l'au moins un sous-ensemble apte à transformer de l'énergie électrique et à la stocker sous forme thermique lors de son utilisation. Il est par exemple prévu de recevoir les impulsions d'un compteur d'eau équipé d'une sortie à contact sec et/ou le signal d'au moins un capteur de température placés aux endroits appropriés du circuit hydraulique en rapport avec l'extraction de l'énergie thermique stockée.

Il est prévu que le dispositif comprenne en outre des moyens pour transmettre à un système d'information au moins une information relative à l'état de l'au moins un sous-ensemble apte à transformer de l'énergie électrique et à la stocker sous forme thermique. L'invention est utilisable dans le cadre d'un système de gestion transmettant de manière unidirectionnelle et inconditionnelle aux dispositifs selon l'invention des consignes prenant le plus souvent la forme d'un simple ordre de télécommande. Dans ce cas, il revient au système de gestion externe de tenir une comptabilité énergétique de chaque dispositif ou d'exécuter un modèle lui permettant de connaitre ou d'estimer la quantité d'énergie stockée, et le cas échéant la quantité d'énergie pouvant encore être stockée, sous le contrôle de chaque dispositif selon l'invention. Lorsque l'invention est mise en œuvre dans un réseau de distribution électrique adossé à un système de télécommunication bidirectionnel ayant une capacité d'adressage individuelle, l'état de chaque dispositif peut avantageusement être remonté au système de gestion de sorte à rendre plus précise la gestion des capacités disponibles à tout moment. Selon le niveau de détail de l'état de l'au moins un sous-ensemble dont le dispositif selon l'invention à connaissance et selon les possibilités du système de transmission du canal de retour, il est prévu par exemple que chaque dispositif informe un système de gestion de la quantité d'énergie accumulée, le cas échéant selon chaque modalité mise en œuvre, de la quantité d'énergie pouvant encore être stockée. Il peut s'agir aussi d'informations d'état binaires telles que « capacité de stockage maximale atteinte », « capacité de stockage maximale de réserve atteinte »... D'autres informations d'intérêt, le cas échéant peuvent aussi être transmises par chaque dispositif à un système de gestion, par exemple la quantité de chaleur extraite, la quantité d'eau extraite, la température de l'eau extraite et/ou entrante...

Selon un autre aspect de l'invention, il est prévu un système apte à transformer une quantité prédéterminée d'énergie électrique et à la stocker sous forme thermique. Le système selon l'invention comprend un dispositif de pilotage selon l'invention et au moins un sous-ensemble apte à transformer de l'énergie électrique et à la stocker sous forme thermique. Il est prévu que le système selon l'invention prenne la forme d'au moins deux appareils distincts, l'appareil de contrôle que constitue le dispositif de pilotage selon l'invention et au moins un appareil assurant la transformation de l'énergie électrique en chaleur et son stockage sous forme thermique. Il est aussi prévu que le système selon l'invention comprenne au moins un appareil intégrant dans la même enveloppe, le dispositif de pilotage selon l'invention et un appareil assurant la transformation de l'énergie électrique en chaleur et son stockage sous forme thermique. Cet appareil peut être complété par des moyens de transformation et/ou de stockage additionnels. La liaison fonctionnelle entre le dispositif selon l'invention et l'au moins un sous-ensemble apte à transformer de l'énergie électrique et à la stocker sous forme thermique est par exemple assurée par le raccordement électrique des fils d'alimentation d'un chauffe-eau à accumulation à la sortie du dispositif ou à un relais de puissance externe contrôlé par le dispositif selon l'invention. Il est aussi prévu que la liaison fonctionnelle entre le dispositif de pilotage selon l'invention et la charge pilotée se fasse par l'intermédiaire d'une télécommande par radiofréquence ou par CPL. Dans ce cas, l'au moins un sous-ensemble apte à transformer de l'énergie électrique et à la stocker sous forme thermique est raccordé au réseau d'alimentation électrique par l'intermédiaire d'au moins un récepteur de télécommande piloté à distance par le dispositif selon l'invention à l'intérieur du bâtiment. La variante de mise en œuvre sous la forme d'un dispositif de pilotage séparé est particulièrement appropriée à la rénovation d'une installation existante comprenant déjà un chauffe eau à accumulation alors que la mise en œuvre sous la forme d'un appareil avec pilotage intégré selon l'invention vise plutôt des nouveaux appareils optimisés pour exploiter au mieux l'invention.

Il est prévu en outre dans le système selon l'invention que l'au moins un sous-ensemble apte à transformer de l'énergie électrique et à la stocker sous forme thermique comprenne des moyens pour transformer de l'énergie électrique sous forme thermique de type thermodynamique et des moyens pour transformer de l'énergie électrique sous forme thermique par effet Joule. Les moyens de type thermodynamiques sont préférés pour leur rendement élevés, leur possibilité de produire du chaud ou du froid selon les besoins. Cela étant leur fonctionnement est limité voir impossible en dehors d'une plage de température donnée de l'échangeur extérieur. L'invention prévoit de compléter avantageusement des moyens de production d'énergie thermique en vue de son stockage par des moyens de chauffage par effet Joule pour augmenter ou suppléer la production thermodynamique. L'utilisation de l'invention dans le cadre de la gestion du réseau de distribution électrique, que ce soit pour stocker de l'énergie excédentaire issue de sources à production intermittente ou pour charger le réseau, pour par exemple corriger un problème d'augmentation de la fréquence, nécessite de mobiliser rapidement une grande puissance cumulée de charges. Cet objectif est plus rapidement atteint en mettant en ouvre des moyens de chauffage par effet Joule dans des systèmes selon l'invention. De plus, le coût marginal de l'ajout d'une résistance blindée ou d'une résistance sur support isolant dans un appareil dont la source d'énergie thermique principale est de type thermodynamique est faible.

Il est prévu en outre dans le système selon l'invention que ledit sous-ensemble apte à transformer de l'énergie électrique et à la stocker sous forme thermique stocke l'énergie sous la forme de chaleur relativement à la température ambiante. Il s'agit de produire et de stocker de la chaleur dans tout matériau approprié.

Il est prévu en outre dans le système selon l'invention que ledit sous-ensemble apte à transformer de l'énergie électrique et à la stocker sous forme thermique stocke l'énergie sous la forme de froid relativement à la température ambiante.

Il est prévu en outre dans le système selon l'invention que l'au moins un sous-ensemble apte à transformer de l'énergie électrique et à la stocker sous forme thermique stocke l'énergie dans un volume de liquide principalement constitué d'eau. Pour stocker de la chaleur ou du froid, il est prévu par exemple d'utiliser un volume d'eau utilisé directement et/ou comme fluide caloporteur dans lequel sont immergés les moyens pour produire l'énergie thermique. Lorsqu'il s'agit de circuits hydrauliques fermés, il est prévu d'ajouter à l'eau de l'antigel et/ou des produits chimiques empêchant la formation de boues.

Il est prévu en outre dans le système selon l'invention que l'au moins un sous-ensemble apte à transformer de l'énergie électrique et à la stocker sous forme thermique stocke l'énergie, au moins en partie, dans un volume de matériau massif et/ou à changement de phase. Ceci en particulier lorsqu'il s'agit de stocker de grandes quantités d'énergie et/ou d'obtenir des sous-ensembles de stockage compacts. Des matériaux massifs sont intéressants pour leur robustesse mécanique et le stockage à haute température. Les matériaux à changement de phase, judicieusement choisis en fonction de leur température de fusion relativement à la température de stockage et d'utilisation optimale dans le contexte de mise en œuvre de l'invention est particulièrement performante en termes de compacité.
Pour la production d'eau chaude sanitaire, des matériaux à changement de phase de type sels hydratés sont particulièrement indiqués. Par exemple l'acétate trihydrate de sodium qui a une température de fusion de 55-58 °C et n'est pas classé comme étant toxique. Ce matériau peut stocker 100 kWh entre 55 °C et 58 °C dans un volume plus de 26 fois plus petit que celui de l'eau. L'utilisation des composés organiques tels que les paraffines et les acides gras est aussi prévue ainsi que celle de tout autre matériau à changement de phase encapsulé de manière appropriée pour permettre une cinématique adéquate des échanges thermique et une rétention sure du matériau.
Pour la réalisation de convecteurs ou de climatiseurs réversibles à accumulation selon l'invention, à la fois compacts et de masse raisonnable, des sels hydratés ayant une température de fusion élevée sont les matériaux à changement de phase de choix. Il peut s'agir par exemple d'hydroxyde de sodium dont la température de fusion est de 318 °C ou de tout autre matériau à changement de phase ayant une température de fusion appropriée.

Il est aussi prévu de combiner le stockage d'énergie thermique dans un volume d'eau et dans des matériaux à changement de phase comme il sera vu plus loin dans les exemples de mise en œuvre de l'invention.

Il est prévu que le système selon l'invention comprenne en outre des moyens de comptage de l'énergie sous forme thermique extraite lors de son utilisation. Ces moyens additionnels sont prévus dans le cadre de services de fourniture d'eau chaude sanitaire et/ou de chaleur ou de rafraichissement pour la climatisation des bâtiments ou encore pour des usages professionnels comprenant dans procédé de fabrication et/ou de conservation. La mise en œuvre de l'invention dans ce contexte permet de découpler la consommation d'énergie électrique utilisée pour produire l'énergie thermique stockée et pour son utilisation.

Il est prévu en outre dans le système selon l'invention qu'au moins une partie de l'énergie sous forme thermique extraite lors de son utilisation l'est par l'intermédiaire d'un courant électrique. Ceci par exemple dans le cadre d'une micro-cogénération locale de chaleur et d'énergie électrique à partir de l'énergie thermique stockée. Il est prévu que la transformation de l'énergie thermique déstockée sous forme d'énergie électrique puisse reposer sur tout type de phénomène physique connu, par exemple par conversion thermoélectrique directe ou encore par une conversion indirecte utilisant des principes de la thermodynamique.

Il est prévu en outre dans le système selon l'invention qu'au moins une partie de l'énergie sous forme thermique extraite lors de son utilisation l'est par l'intermédiaire d'un flux d'air la transportant. Ceci concerne par exemple un système de chauffage électrique à accumulation ou un climatiseur réversible ou non à accumulation dans lequel la chaleur ou le froid accumulé est extrait selon les besoins par un flux d'air produit par un ventilateur. Cela concerne aussi par exemple un système de ventilation mécanique à insufflation ou double flux, avec apport et stockage de chaleur, ou de froid selon les saisons le cas échéant.

Il est prévu en outre dans le système selon l'invention qu'au moins une partie de l'énergie sous forme thermique extraite lors de son utilisation l'est par l'intermédiaire d'un volume de liquide la transportant. Le liquide étant de l'eau courante lorsqu'il s'agit de production d'eau chaude sanitaire ou un fluide circulant en circuit fermé pour le chauffage et/ou le rafraichissement de locaux par l'intermédiaire de ventilo-convecteurs à échangeur thermique ou de tubes formant échangeur qui sont inclus dans des murs, des plafonds ou des planchers.

Il est prévu que le système selon l'invention comprenne en outre des moyens pour fournir un flux d'air ou de liquide à une température différente de la température à laquelle est stockée l'énergie sous forme thermique. Par exemple, une chambre permettant le mélange d'un flux d'air à la température des moyens de stockage de l'énergie sous forme thermique et d'un flux d'air à la température ambiante de sorte à produire un flux d'air à une température intermédiaire. Dans le cas d'un flux de liquide, il s'agit par exemple d'un mélangeur produisant un flux de liquide à une température intermédiaire à partir d'un flux de liquide à la température des moyens de stockage et d'un flux de liquide qui est à la température d'entrée dans les moyens de stockage. Il est prévu qu'avantageusement les moyens pour fournir un flux d'air ou de liquide à une température différente de la température à laquelle est stockée l'énergie sous forme thermique comprennent des moyens thermostatiques régulant la température du flux fourni à une valeur sensiblement constante. Ces moyens de régulation sont par exemple des moyens thermostatiques mécaniques basés sur la dilatation des matériaux ou des moyens de régulation électroniques comprenant en outre au moins un capteur de température et un actionneur électromécanique. Bien entendu ces solutions sont transposables au stockage de froid, par exemple dans le cas d'un stockage de froid sous forme de chaleur latente dans un matériau à changement de phase à une température plus basse que la température d'utilisation.

Il est prévu que le système selon l'invention forme un appareil de production d'eau chaude sanitaire à accumulation.

Il est prévu que le système selon l'invention comprenne en outre un compteur d'eau et/ou des moyens pour mesurer la température de l'eau extraite et/ou des moyens pour mesurer la température de l'eau entrante. Ces moyens complémentaires étant prévus dans le cadre d'un service de fourniture d'eau chaude sanitaire en vue de sa facturation.

Il est prévu que le système selon l'invention forme un appareil de chauffage et/ou de refroidissement à accumulation. L'invention est ainsi mise en œuvre dans le cadre d'appareils de production d'énergie thermique décentralisés, comme par exemple des convecteurs ou des climatiseurs à accumulation, ou centralisés comme des chaudière ou des centrales de chauffage et/ou de rafraichissement à accumulation.

Il est prévu que le système selon l'invention soit agencé pour offrir au moins deux modalités distinctes de stockage de l'énergie électrique sous forme thermique, au moins une modalité pour un stockage récurrent et au moins une modalité exploitant une réserve de capacité de stockage sous forme thermique pour un stockage occasionnel.
L'invention prévoit que puisse coexister dans le même système selon l'invention la transformation d'une quantité prédéterminée d'énergie électrique et son stockage sous forme thermique avec un service traditionnel de transformation d'une quantité non prédéterminée d'énergie électrique et son stockage sous forme thermique. Dans le cas d'un chauffe-eau électrique à accumulation par exemple, il s'agit de pouvoir fonctionner à la fois selon l'invention et de produire quotidiennement de l'eau chaude par exemple en asservissant son fonctionnement au système de tarification de l'énergie électrique pour chauffer pendant les périodes tarifaires avantageuses, par exemple en heures creuses en France. Ce but peut être atteint dans le cadre d'un même système selon l'invention comprenant un seul sous-ensemble pour stocker l'énergie sous forme thermique, en l'espèce un même volume d'eau et un seul sous-ensemble pour transformer de l'énergie électrique sous forme thermique, en l'espèce une résistance blindée immergée ou une résistance sur support isolant placée dans un fourreau, ou encore un échangeur chaud d'un sous-système de type thermodynamique. Cependant, pour ne pas rendre impossible l'absorption et le stockage d'une quantité prédéterminée d'énergie pour cause de saturation des capacités de stockage dans le cadre d'un fonctionnement traditionnel, il est préféré de mettre en œuvre l'invention avec une capacité de stockage additionnelle qui lui soit réservée. L'intérêt d'une capacité de stockage additionnelle est encore renforcé dans le cadre d'une mise en œuvre de l'invention ne comprenant pas de transmission d'information relative à l'état du sous-ensemble pour stocker l'énergie sous forme thermique. Dans un tel contexte de mise en œuvre, les systèmes selon l'invention sont réputés toujours être en capacité de stocker sous forme thermique une nouvelle quantité prédéterminée d'énergie électrique et la gestion de la facturation associée ne peut pas tenir compte d'une incapacité physique à stocker davantage d'énergie.
Une capacité de stockage additionnelle, toutes choses étant égales par ailleurs, peut avantageusement être créée en gérant de manière différenciée la température de stockage sous forme thermique. Par exemple pour un chauffe-eau à accumulation, dans le cadre du fonctionnement traditionnel l'eau est chauffée pendant les heures creuses à une première température de consigne donnée, par exemple à 65°C. Le fonctionnement selon l'invention se fait sur la base d'une seconde température de consigne plus élevée que la première, par exemple 85°C. Il est prévu que la capacité de stockage thermique additionnelle soit considérablement augmentée par l'utilisation combinée de matériau à changement de phase avec l'eau comme milieu de stockage de l'énergie sous forme thermique. La température de changement de phase du matériau étant par exemple située entre les deux températures de consigne de sorte à ne stocker de l'énergie thermique sous forme de chaleur latente dans le matériau à changement de phase que dans le mode de fonctionnement selon l'invention. L'atteinte de la seconde température se produit lorsque les capacités de stockage thermique sous forme de chaleur latente sont saturées et que le matériau reprend un comportement de stockage de chaleur dite sensible, c'est à dire qu'une augmentation de l'énergie thermique stockée dans le matériau provoque une augmentation de sa température.

Il est prévu que le système selon l'invention comprenne en outre des moyens pour contribuer à l'apport d'énergie sous forme thermique qui ne sont pas raccordés au réseau de distribution électrique. Ces moyens additionnels sont compris dans ledit sous-ensemble apte à transformer de l'énergie électrique et à la stocker sous forme thermique. Il peut s'agir par exemple de moyens de production de chaleur électriques directement raccordés à une source de production locale isolée du réseau comme des panneaux solaires électriques de toiture ou une éolienne. Il peut également s'agir d'un échangeur thermique raccordé à un circuit comprenant un fluide caloporteur raccordé à des panneaux solaires thermiques, à un poêle à bois etc. Le système selon l'invention comprend aussi le cas échant au moins une pompe assurant la circulation de fluides caloporteurs si le fonctionnement dit en thermosiphon n'est pas suffisant ou pas souhaitable. Des moyens sont prévus pour gérer la circulation de fluides caloporteurs de sorte qu'elle ne puisse engendrer que des apports d'énergie thermique dans les moyens de stockage. Des moyens sont aussi prévus pour bloquer tout apport d'énergie thermique susceptible de représenter un danger pour les personnes ou pour le matériel, par exemple en cas de saturation des capacités de stockage lorsqu'il y a un risque de montée en température approchant la température d'ébullition du matériau utilisé pour le stockage thermique.

Selon un autre aspect de l'invention, il est prévu un procédé pour exploiter dans un réseau électrique une pluralité de systèmes selon l'invention.
Le procédé selon l'invention comprend les étapes de :
- Surveillance continue de l'équilibre entre la consommation et la production d'électricité au sein dudit réseau électrique par un système de supervision et de gestion approprié;
- Transmission par ledit système de supervision et de gestion approprié, à une pluralité déterminée de systèmes selon l'invention, d'au moins une consigne de transformation et de stockage d'une quantité prédéterminée d'énergie électrique, pour consommer une quantité cumulée d'énergie électrique prédéterminée de sorte à ajuster la consommation d'électricité à la production dans le cas d'une production excédentaire donnée.

Le procédé selon l'invention comprend en outre l'étape de :
- Mémorisation dans au moins un système d'information, d'au moins une information en rapport avec la transmission par ledit système de supervision et de gestion approprié, à une pluralité déterminée de systèmes selon l'invention, d'au moins une consigne de transformation et de stockage d'une quantité prédéterminée d'énergie électrique.

Le procédé selon l'invention prévoit par exemple la mémorisation dans une base de données, de l'identification des installations comprenant au moins un système selon l'invention auxquels les consignes sont transmises, des quantités prédéterminées d'énergie électrique associées aux consignes, du nombre de systèmes selon l'invention compris dans chaque installation et, le cas échéant, de leurs puissances nominales respectives, ainsi que de l'horodatage de la transmission des consignes. Tout ou partie de ces informations permettant que des corrections appropriées soient réalisées en temps utile sur des variations d'index des compteurs d'énergie impactés pendant des périodes de facturation données.

Le procédé selon l'invention comprend en outre l'étape de :
- Correction au sein d'au moins un système d'information, d'au moins un chiffre en rapport avec le comptage de l'énergie électrique consommée dans une installation où au moins un système selon l'invention est mis en œuvre, lorsque la quantité d'énergie électrique ayant été consommée par ledit système l'a été au moins en partie alors qu'un index de comptage inapproprié était activé dans les moyens de comptage associés à ladite installation.

Par exemple, dans le cas du double tarif heures pleines / heures creuses français, si les besoins d'équilibrage du réseau de distribution nécessitent la transmission d'une consigne de transformation et de stockage d'une quantité prédéterminée d'énergie électrique en heures pleines alors qu'il est prévu en usage normal que ceci se fasse exclusivement en heure creuses. Une correction est prévue a posteriori sur la facture du client de l'opérateur. Cette correction pourra par exemple se faire sur l'assiette des index de comptage relevés ou estimés exprimés par exemple en kWh avant l'application des règles tarifaires permettant la transformation des quantités d'énergie consommées en unité monétaire. Il est prévu aussi que cette correction se fasse en unité monétaire dans le cadre du calcul de la somme nette à payer par le client pour une période de facturation donnée, partant de la somme qui serait à payer par l'application des règles tarifaires aux index de comptage relevés ou estimés. La correction prévue dans les comptes d'une installation donnée consiste par exemple à soustraire la quantité d'énergie prédéterminée ou la somme correspondante en unité monétaire des postes inappropriés, le cas échéant multipliée par le nombre de systèmes selon l'invention mis en œuvre dans cette installation, puis à ajouter les quantités précédemment soustraites aux postes considérés comme étant plus appropriés. Il est aussi prévu de corriger au moins un chiffre pour appliquer un modèle économique spécifique aux appareils et/ou aux services mis en œuvre dans le cadre de l'invention. L'invention permet en outre d'opter pour une variante de mise en œuvre simplifiée du dispositif selon l'invention lorsque les corrections sont calculées à partir d'une quantité d'énergie globale consommée constante telle que comptabilisée sur une période donnée par le compteur d'énergie de l'installation qui agréé pour des transactions financières. En effet, dans ces conditions, des moyens pour estimer ou pour mesurer la quantité d'énergie électrique fournie, qui seraient insuffisamment précis pour permettre en tant que tels des transactions économiques, le sont suffisamment pour permettre une correction d'affectation de résultats de comptage ayant la précision requise.
Le même principe est applicable aux structures tarifaires plus complexes telles que le tarif « Tempo » à 6 index, 3 types de jours et des périodes en heures pleines et en heures creuses dans chaque jour. Les corrections nécessitent dans ce cas un horodatage complet de la transmission des consignes et la mémoire du calendrier tarifaire applicable à l'installation cliente. La connaissance de la puissance unitaire des charges dans la base de données contenant les informations caractérisant les systèmes selon l'invention dans l'installation cliente permet de recalculer le temps de fonctionnement des charges et ainsi de faire des corrections prorata temporis lorsque la période de consommation comprend des changements d'index. En pratique, il sera préféré d'arrondir les corrections dans le sens le plus favorable au client, à la fois pour simplifier la mise en œuvre de l'invention et pour renforcer son acceptabilité.

Il est prévu l'application du procédé selon l'invention pour la gestion d'un réseau de distribution d'énergie électrique comprenant des sources d'énergie à production intermittente dont les contributions sont impossibles à planifier de manière certaine telles que des éoliennes, des panneaux photovoltaïques, des centrales solaires où l'électricité est produite par des moyens de type thermodynamique etc.

Il est prévu l'application du procédé selon l'invention dans le cadre d'un service d'acquisition et de stockage d'énergie électrique produite en excédent, et de fourniture de l'énergie thermique correspondante dans des locaux sous une forme appropriée. Il s'agit d'organiser et de gérer une capacité de stockage comprenant une pluralité de systèmes selon l'invention, de l'exploiter en mettant en œuvre le procédé selon l'invention en vue de consommer des excédents de production susceptibles de déséquilibrer un réseau d'électricité pour revendre l'énergie stockée sous forme thermique.

Il est prévu l'application du procédé selon l'invention dans le cadre d'un service de fourniture d'eau chaude sanitaire et/ou de chauffage et/ou de refroidissement et/ou d'électricité. Ces fournitures s'entendent dans des locaux domestiques ou professionnels ou encore dans le cadre de procédés industriels.

### Brève description des dessins

D'autres avantages et caractéristiques de l'invention apparaîtront à l'examen de la description détaillée de modes de mise en œuvre nullement limitatifs, et des dessins annexés où :
La figure 1 illustre une première variante de schéma bloc du dispositif.
La figure 2 illustre une seconde variante de schéma bloc du dispositif.
La figure 3 illustre une première variante du système en éléments séparés.
La figure 4 illustre une seconde variante du système en éléments séparés.
La figure 5 illustre une troisième variante du système en éléments séparés.
La figure 6 illustre une quatrième variante du système en éléments séparés.
La figure 7 illustre une première variante intégrée du système.
La figure 8 illustre une seconde variante intégrée du système.
La figure 9 illustre une troisième variante intégrée du système.
La figure 10 illustre une quatrième variante intégrée du système.
La figure 11 illustre une première variante de chauffe-eau intégré.
La figure 12 illustre une seconde variante de chauffe-eau intégré.
Les figures 13a et 13b illustrent une variante de chauffage électrique intégré.
La figure 14 illustre les étapes du procédé en lien avec l'équilibre du réseau.
La figure 15 illustre les étapes du procédé en lien avec la valorisation.

### Description détaillée des figures et des modes de réalisation

D'autres particularités et avantages de l'invention apparaîtront encore dans la description ci-après. Aux dessins annexés donnés à titre d'exemples non limitatifs :

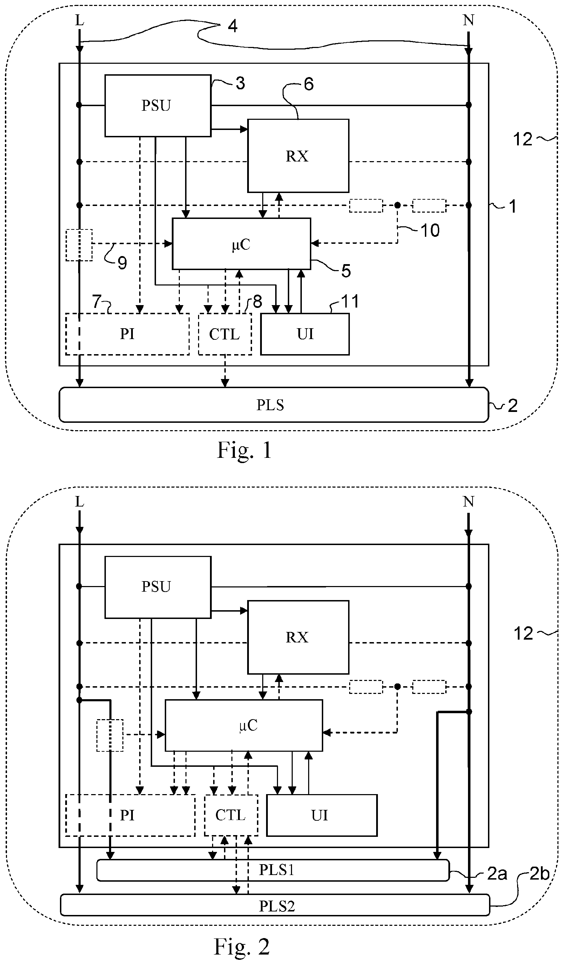

La **figure 1** illustre une première variante de schéma bloc du système.

Le schéma bloc du système 12 comprend un dispositif 1 selon l'invention pour piloter au moins un sous-ensemble apte à transformer de l'énergie électrique 2 et à la stocker sous forme thermique comprenant au moins une charge électrique de puissance. Le dispositif 1 comprend, un sous-ensemble d'alimentation basse tension 3 fournissant les tensions nécessaires au fonctionnement des autres sous-ensembles à partir de la tension de l'installation électrique 4 à laquelle il est connecté. Au cœur du dispositif se trouve le microcontrôleur 5 qui gère les ressources du dispositif au moyen d'un logiciel contenu dans sa mémoire de programme, d'une mémoire RAM de travail et d'une mémoire non volatile destinée au stockage permanent de paramètres de fonctionnement et le cas échéant d'états fonctionnels. Des modèles de la famille de microcontrôleurs 8bit AVR « tiny » d'Atmel (marques déposées), ou des modèles de la famille de microcontrôleurs 16bit « MSP430 » de Texas Instrument (marques déposées), sont particulièrement appropriés mais de nombreuses autres références utilisables existent aussi chez d'autres fabricants de semi-conducteurs. Un sous-ensemble de communication 6 assure au moins la réception de la consigne dont la réception déclenche la fourniture d'une quantité prédéterminée d'énergie électrique. L'utilisation de tous types de support physique et de protocole de communication étant prévue dans le cadre de l'invention. Il est aussi prévu d'utiliser un transmetteur apte à recevoir et à émettre des informations pour rendre le dispositif compatible avec certains standards télécom requérant des échanges bidirectionnels. Lorsque l'au moins un sous-ensemble apte à transformer de l'énergie électrique 2 et à la stocker sous forme thermique est une charge électrique ne comprenant pas de moyens commutation de puissance ou ne comprenant pas d'interface permettant au dispositif 1 de le télécommander, alors des moyens de commutation sont intégrés dans une interface de puissance 7. L'interface de puissance 7 comprend par exemple au moins un relais de puissance électromécanique ou statique et son électronique de commande. Dans le cas contraire, la puissance issue du réseau électrique, via le cas échéant des moyens de mesure du courant, est fournie directement à l'au moins un sous-ensemble apte à transformer de l'énergie électrique 2 et à la stocker sous forme thermique. Il est aussi prévu que l'au moins un sous-ensemble de puissance piloté soit télécommandé par le dispositif par l'intermédiaire de tout moyen de contrôle usuel 8 de type unidirectionnel ou bidirectionnel. Les moyens de contrôle 8 communiquent avec l'au moins un sous-ensemble apte à transformer de l'énergie électrique 2 et à la stocker sous forme thermique par exemple par « fil pilote », par courants porteurs, par radiofréquence, par infrarouge ou par tous moyens filaires. Ceci permet d'utiliser des moyens de commutation de puissance externes au dispositif qui sont déjà mis en œuvre dans des appareils pilotés, par exemple pour gérer l'au moins une charge électrique de puissance au sein de l'au moins un sous-ensemble apte à transformer de l'énergie électrique 2 et à la stocker sous forme thermique ou pour réguler sa température. En outre, lorsque le dispositif selon l'invention ne comprend pas de moyens pour mesurer la puissance électrique fournie, il est prévu d'acquérir un signal en relation avec la tension d'alimentation de la charge de puissance. Ce raffinement permet de n'intégrer la puissance dans le calcul d'estimation de l'énergie fournie que lorsque l'au moins une charge électrique de puissance est réellement alimentée. Il permet aussi le cas échéant de tenir compte des variations de la tension d'alimentation par rapport à sa valeur nominale pour corriger l'estimation de l'énergie fournie, par exemple par application d'un coefficient de proportionnalité ou de corrections extraites d'une table à la valeur de la puissance nominale de l'au moins une charge électrique de puissance.

Selon les variantes mises en œuvre pour estimer ou pour mesurer l'énergie fournie, le dispositif comprend des moyens 9 pour connaitre le courant circulant dans l'au moins un sous-ensemble apte à transformer de l'énergie électrique 2 et à la stocker sous forme thermique et/ou des moyens 10 pour connaitre sa tension d'alimentation. Selon les cas de mise en œuvre, les moyens 10 prélèvent l'information de tension à l'endroit le plus pertinent. Par exemple au niveau de l'alimentation générale issue de l'installation électrique 4 comme dans la figure 1 ou directement aux bornes des charges de puissance à l'intérieur du bloc 2.

Dans le schéma de la figure 1, le même microcontrôleur 5 est prévu pour mettre en œuvre tous les aspects de l'invention y compris pour mesurer la puissance consommée par l'au moins un sous-ensemble apte à transformer de l'énergie électrique 2 et à la stocker sous forme thermique le cas échéant. Bien entendu l'homme du métier comprendra que toutes les solutions bien connues pour mesurer une puissance ou l'énergie électrique reposant ou non sur l'utilisation de circuits intégrés externes spécialisés pour la métrologie, utilisant par exemple pour la mesure du courant un shunt, un transformateur de courant, un capteur à effet hall, à effet Néel, une sonde à enroulement de Rogowski sont aussi utilisables sans sortir du cadre de l'invention.

Une interface utilisateur 11 comprenant au moins un bouton poussoir et un voyant lumineux permet les interactions entre le dispositif et l'utilisateur.

Les systèmes selon l'invention comprenant des moyens de stockage de l'énergie, il est souvent intéressant pour l'utilisateur de bénéficier d'une information de type « jauge » lui permettant de connaitre l'état des capacités de stockage embarquées.

La **figure 2** illustre une seconde variante de schéma bloc du système.

Cette figure diffère de la précédente en ce qu'elle comprend deux sous-ensembles aptes à transformer de l'énergie électrique 2a et 2b et à la stocker sous forme thermique. Cette variante correspond au cas d'un système 12 selon l'invention formant un appareil offrant deux modes de consommation de l'énergie électrique. Au mode de consommation selon l'invention où il s'agit de transformer une quantité prédéterminée d'énergie électrique et à la stocker sous forme thermique est ajouté un mode de consommation traditionnel, sans limitation à une valeur prédéterminée de la quantité d'énergie électrique fournie à la charge par le dispositif selon l'invention. Ce schéma bloc correspond par exemple à un appareil de chauffage ou de climatisation comprenant un sous-ensemble de transformation et de stockage de l'énergie piloté selon l'invention plus un sous-ensemble traditionnel de fourniture immédiate de chaleur ou de froid sans stockage. Par exemple un convecteur disposant d'un panneau radiant traditionnel à action immédiate auquel une capacité d'accumulation est ajoutée pour une utilisation de la chaleur stockée en temps différé. Un autre exemple est un climatiseur contenant dans le même appareil un sous-ensemble apte à fournir un service immédiat par des moyens de type thermodynamique à haute efficacité énergétique et un sous-ensemble de stockage thermique de chaleur et/ou de froid. Il est aussi prévu que tout ou partie des sous-ensembles de puissance, en particulier celui qui est destiné à fournir un service immédiat, soit télécommandé par le dispositif par l'intermédiaire de tout moyen usuel, par exemple par « fil pilote » ou par des moyens de télécommande sans fils.

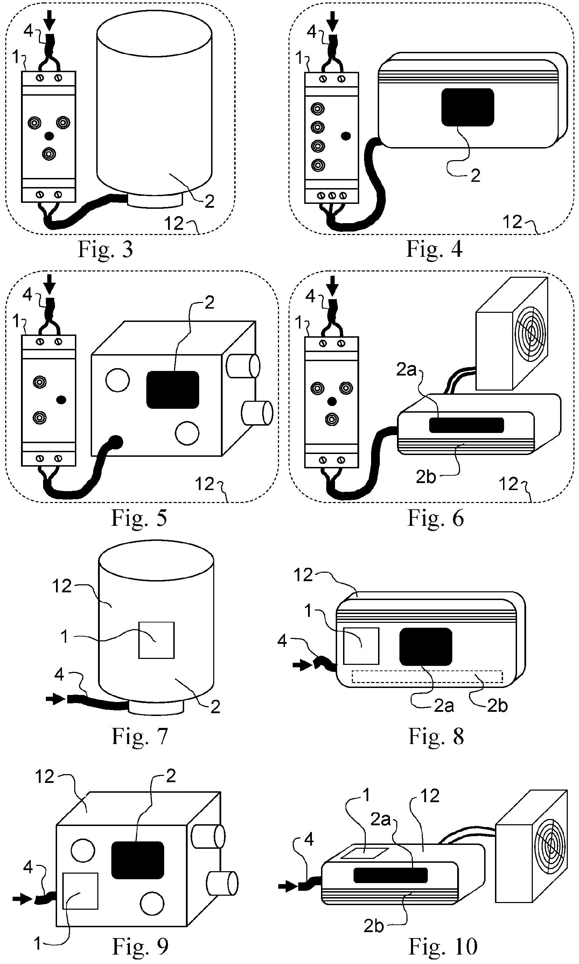

La **figure 3** illustre une première variante du système en éléments séparés.

Le système selon l'invention 12 est mis en œuvre sous forme de deux appareils séparés 1, 2. Le système selon l'invention dans cet exemple forme un système de production d'eau chaude sanitaire à accumulation. Le dispositif selon l'invention 1 connecté au réseau électrique 4 et l'au moins un sous-ensemble apte à transformer de l'énergie électrique 2 et à la stocker sous forme thermique. L'au moins un sous-ensemble apte à transformer de l'énergie électrique 2 sous forme thermique comprend dans cet exemple une résistance électrique ou des moyens de chauffage de type thermodynamique et un thermostat de régulation de la température de l'eau ainsi que, le cas échéant un thermostat de sécurité séparé. L'au moins un sous-ensemble apte à stocker l'énergie sous forme thermique est ici une cuve comprenant un volume d'eau.

La **figure 4** illustre une seconde variante du système en éléments séparés.

Le système selon l'invention 12 est mis en œuvre sous forme de deux appareils séparés 1, 2. Le système selon l'invention dans cet exemple forme un appareil de chauffage à accumulation ou mixte, c'est à dire à accumulation et à chauffage immédiat. Le dispositif selon l'invention 1 connecté au réseau électrique 4 et l'au moins un sous-ensemble apte à transformer de l'énergie électrique 2 et à la stocker sous forme thermique. L'au moins un sous-ensemble apte à transformer de l'énergie électrique 2 sous forme thermique comprend dans cet exemple une résistance électrique et un thermostat de régulation de la température du matériau utilisé pour le stockage d'énergie sous forme thermique ainsi que, le cas échéant un thermostat de sécurité séparé. L'au moins un sous-ensemble apte à stocker l'énergie sous forme thermique est ici un volume de matériau massif et/ou à changement de phase compris dans une enveloppe appropriée et complété par des moyens pour extraire et restituer la chaleur stockée.

La **figure 5** illustre une troisième variante du système en éléments séparés. Le système selon l'invention 12 est mis en œuvre sous forme de deux appareils séparés 1, 2. Le système selon l'invention dans cet exemple forme un système de ventilation mécanique contrôlée de type « à insufflation » ou « à double flux ». Ces systèmes de ventilation actifs destinés au renouvellement de l'air intérieur des bâtiments sont caractérisés en ce que de l'air neuf est aspiré à l'extérieur et distribué à l'intérieur des locaux. Ces systèmes de ventilation comprennent avantageusement des moyens pour chauffer ou pour préchauffer l'air distribué dans les locaux. Ces appareils généralement installés dans les combles ou dans des locaux techniques ne sont pas contraints par leur encombrement, ils peuvent dès lors avantageusement intégrer des moyens de stockage de l'énergie thermique pour mettre en œuvre l'invention. Le dispositif selon l'invention 1 connecté au réseau électrique 4 et l'au moins un sous-ensemble apte à transformer de l'énergie électrique 2 et à la stocker sous forme thermique. Le sous-ensemble 2 comprend dans cet exemple une résistance électrique et un thermostat de régulation de la température du matériau utilisé pour le stockage d'énergie sous forme thermique ainsi que, le cas échéant un thermostat de sécurité séparé. L'au moins un sous-ensemble apte à stocker l'énergie sous forme thermique est ici un volume de matériau massif et/ou à changement de phase compris dans une enveloppe appropriée et complété par des moyens pour extraire et restituer la chaleur stockée dans le flux d'air distribué.

La **figure 6** illustre une quatrième variante du système en éléments séparés. Le système selon l'invention 12 est mis en œuvre sous forme de deux appareils séparés 1, 2. Le système selon l'invention dans cet exemple forme un système de climatisation à accumulation ou mixte, c'est à dire à accumulation et à chauffage ou rafraichissement immédiat. Les systèmes de climatisation peuvent avantageusement mettre en œuvre l'invention pour stocker du froid et/ou de la chaleur aux moments opportuns et pour l'utiliser ultérieurement selon les besoins. Ce type d'appareil se prête naturellement à la mise en œuvre de l'invention en ce qu'il comprend déjà des moyens de gestion embarqués sophistiqués et des moyens pour générer et piloter un flux d'air. Le dispositif selon l'invention 1 connecté au réseau électrique 4 et l'au moins un sous-ensemble apte à transformer de l'énergie électrique 2a, 2b et à la stocker sous forme thermique. L'au moins un sous-ensemble apte à transformer de l'énergie électrique 2a, 2b sous forme thermique comprend dans cet exemple, un échangeur thermique dans le cas de moyens de type thermodynamique ou une résistance électrique, un thermostat de régulation de la température du matériau utilisé pour le stockage de l'énergie, et le cas échéant un thermostat de sécurité séparé. L'au moins un sous-ensemble apte à stocker l'énergie sous forme thermique est ici un volume de matériau à changement de phase en raison de sa compacité et de sa faible masse. En effet, la partie d'un climatiseur qui se trouve dans des locaux est souvent suspendue en partie haute d'un mur. Le volume de matériau à changement de phase est compris dans une enveloppe appropriée et complété par des moyens pour extraire et restituer le froid ou la chaleur stockée dans le flux d'air sortant du climatiseur.

La **figure 7** illustre une première variante intégrée du système.

Cet exemple de système selon l'invention 12 diffère de celui de la figure 3 en ce qu'il prend la forme d'un appareil unique selon l'invention, en l'espèce un appareil de production d'eau chaude sanitaire à accumulation, au sein duquel le dispositif 1 et l'au moins un sous-ensemble apte à transformer de l'énergie électrique 2 et à la stocker sous forme thermique sont intégrés dans la même enveloppe.

La **figure 8** illustre une première variante intégrée du système.

Cet exemple de système selon l'invention 12 diffère de celui de la figure 4 en ce qu'il prend la forme d'un appareil unique selon l'invention, en l'espèce un appareil de chauffage électrique à accumulation, au sein duquel le dispositif 1 et l'au moins un sous-ensemble apte à transformer de l'énergie électrique 2a, 2b et à la stocker sous forme thermique sont intégrés. Dans cette variante coexistent un sous-ensemble de chauffage à effet immédiat 2b, par exemple par convection, par panneau résistif radiant ou par infrarouges et un sous-ensemble de production de chaleur à accumulation 2a.

La **figure 9** illustre une première variante intégrée du système.

Cet exemple de système selon l'invention 12 diffère de celui de la figure 5 en ce qu'il prend la forme d'un appareil unique selon l'invention, en l'espèce un appareil de ventilation mécanique centralisée comprenant des moyens de chauffage à accumulation, au sein duquel le dispositif 1 et l'au moins un sous-ensemble apte à transformer de l'énergie électrique 2 et à la stocker sous forme thermique sont intégrés.

La **figure 10** illustre une première variante intégrée du système.

Cet exemple de système selon l'invention 12 diffère de celui de la figure 6 en ce qu'il prend la forme d'un appareil unique selon l'invention, en l'espèce un appareil de climatisation à accumulation de froid et/ou de chaleur, au sein duquel le dispositif 1 et l'au moins un sous-ensemble apte à transformer de l'énergie électrique 2a, 2b et à la stocker sous forme thermique sont intégrés.

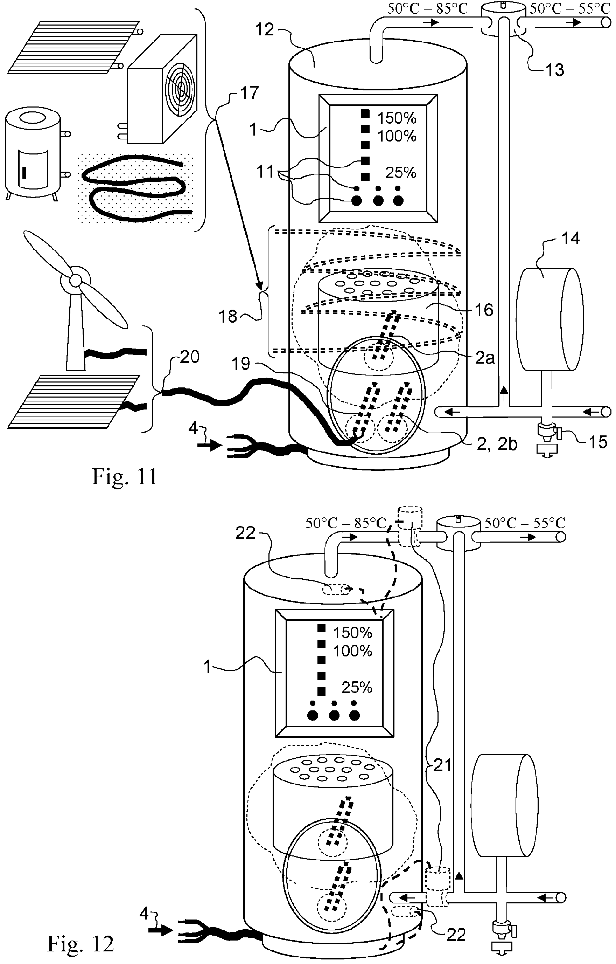

La **figure 11** illustre une première variante de chauffe-eau intégré.

Cet exemple illustre un appareil de production d'eau chaude sanitaire à accumulation selon l'invention 12 qui offre en outre un mode de fonctionnement récurrent traditionnel de type stockage pendant les heures creuses du tarif de l'électricité. Les deux modes étant gérés par un dispositif selon l'invention 1 intégré dans l'enveloppe du chauffe-eau et raccordé au réseau électrique 4. Le dispositif comprend des moyens d'interaction avec l'utilisateur 11 dont des moyens d'affichage indiquant l'état des capacités de stockage. Une première sous-variante prévoit de n'utiliser qu'une seule résistance 2 pour les deux modes de fonctionnement traditionnel et selon l'invention ainsi que la même cuve ne contenant que de l'eau.

Une réserve de capacité de stockage d'énergie thermique est spécialement dédiée à la mise en œuvre de l'invention, ceci sans modification significative d'un ballon d'eau chaude courant. L'objectif est atteint par une gestion appropriée de la température de l'eau chaude produite. Dans cet exemple, l'eau est chauffée tous les jours pendant les heures creuses à une première température de consigne du thermostat, par exemple à 65°C. Lorsqu'une consigne de transformation et de stockage sous forme thermique d'une quantité prédéterminée d'énergie électrique est reçue par le dispositif, le fonctionnement selon l'invention se fait alors sur la base d'une seconde température de consigne du thermostat qui est plus élevée que la première, par exemple 85°C. L'accroissement d'énergie thermique ainsi stockée se traduit en un accroissement du volume d'eau chaude stocké à la sortie d'un mélangeur thermostatique 13 qui produit une eau à température intermédiaire proche de la première température de consigne par ajout d'eau froide à l'eau stocké à la seconde température de consigne. Le mélangeur thermostatique améliore en outre la sécurité des utilisateurs de l'appareil en éliminant tout risque de brûlure des personnes qu'une eau à température très élevée pourrait présenter. Le mélangeur thermostatique peut être monté en tant que composant extérieur du chauffe-eau au même titre que le vase d'expansion 14, nécessaire pour ne pas perdre d'eau par la valve de sécurité pendant les cycles de chauffage robinets fermés, ou le groupe de sécurité 15. Le mélangeur peut aussi avantageusement être pré-monté et intégré dans l'enveloppe de l'appareil comme tout ou partie des autres accessoires indispensables pour former un appareil complet, bénéficiant d'une isolation thermique globale de tous ses composants à l'intérieur d'une enveloppe esthétique. L'appareil mettant en œuvre l'invention est ainsi prêt par exemple à se substituer à un modèle ancien de même encombrement à remplacer, les raccordements hydrauliques et électriques étant avantageusement étudiés pour être directement compatibles avec ceux des modèles traditionnels.

Il est aussi prévu une sous-variante exploitant un volume de matériau à changement de phase 16 dont la température de fusion est choisie entre les deux valeurs de consigne du thermostat vues précédemment. L'introduction de ce matériau contenu dans une enveloppe appropriée pour permettre des échanges thermiques efficaces, augmente considérablement la capacité additionnelle de stockage d'énergie selon l'invention, par exemple au point de pouvoir se passer, si nécessaire, du mode traditionnel de chauffage en heure creuses pour ne consommer que de l'énergie électrique produite par des sources durables à production intermittentes si l'invention est mise ne œuvre par l'exploitant du réseau pour en stocker les excédents imprévus. La compacité qu'autorise l'utilisation des matériaux à changement de phase eu égard à leur grande capacité de stockage énergétique sous forme de chaleur latente permet de mettre en œuvre l'invention dans des chauffe-eau électriques ayant des encombrements et des masses voisins des modèles classiques pour une capacité donnée exprimée en litres d'eau.

Il est aussi prévu dans une autre sous-variante que les moyens pour transformer l'énergie électrique sous forme thermique utilisés dans le cadre de l'invention 2a et pour chauffer l'eau en mode traditionnel 2b soient différenciés. Cette spécialisation est d'autant plus intéressante que la solution pour le chauffage traditionnel est à haute efficacité énergétique, par exemple un sous-ensemble de production de chaleur de type thermodynamique. Le chauffage par effet Joule étant préféré pour le stockage selon l'invention en ce que maximiser la puissance de la charge électrique permet de contribuer plus efficacement à l'équilibrage de la demande en fonction de la production dans le réseau électrique. Cette variante de mise en œuvre prévoit aussi des apports d'énergie thermique externes optionnels 17 au moyen d'un échangeur thermique 18 placé dans le volume de stockage commun. Ces apports peuvent venir par exemple de toute source de chaleur, panneaux solaires thermiques, pompe à chaleur, géothermie, chaudière à gaz, à bois ou au fioul, réseau de chauffage urbain etc. Il est prévu que la circulation du fluide caloporteur par pompe de circulation ou par thermosiphon ne se fasse que lorsque la contribution de la source externe est positive. Il est aussi prévu qu'au moins un moyen pour transformer de l'énergie électrique sous forme thermique 19 soit connecté directement à une source de production locale 20 non raccordée au réseau électrique comme par exemple une éolienne ou des panneaux solaires électriques. Des sécurités sont aussi prévues pour bloquer les apports d'énergie afin d'éviter que l'eau, et/ou le matériau à changement de phase le cas échéant, n'atteignent des températures dangereuses pour les personnes ou pour le matériel.

La **figure 12** illustre une seconde variante de chauffe-eau intégré.

Cette variante diffère de celle de la figure 11 en ce qu'elle est plus particulièrement dédiée à la fourniture d'eau chaude sanitaire par un opérateur possiblement distinct de celui qui fournit l'énergie électrique de l'installation. Il peut s'agir par exemple d'un opérateur spécialisé dans la fourniture d'eau qui peut, grâce à la mise en œuvre de l'invention, ajouter une prestation de fourniture d'eau chaude sanitaire à ses clients traditionnels faisant déjà l'objet d'une facturation pour un service analogue. Cet opérateur peut également fournir des prestations de consommation d'une quantité prédéterminée d'énergie électrique et/ou des prestations d'effacement de charges au gestionnaire du réseau électrique, à des moments où cela arrange ce dernier. L'opérateur peut acheter l'énergie électrique au distributeur d'électricité dont dépend l'installation, ce dernier rétrocédant à son client les quantités/montants correspondants dans sa facturation. L'opérateur peut aussi n'avoir aucun lien avec le distributeur d'électricité de son client et déduire de ses propres factures les coûts de l'électricité à rembourser à son client. En effet, les coûts de l'électricité facturés au client commun par le distributeur dans le cadre de sa consommation globale d'énergie électrique peuvent être aisément reconstitués lorsqu'on connait les quantités d'électricité consommées pour la mise en œuvre de l'invention, les horodatages correspondants et le tarif souscrit par le client auprès des son distributeur d'électricité car ces derniers sont publics. Les moyens compris dans cette variante du dispositif selon l'invention pour recevoir les consignes peuvent être spécifiques à cet opérateur, par exemple en étant connectable à une infrastructure de réseau de télécommunication de type « Machine to Machine » ayant vocation principale à télérelever des compteurs d'eau, de gaz, de chaleur etc. en rapport avec les services proposés par cet opérateur. Il peut s'agir d'un réseau radiofréquence de type cellulaire standard ou un réseau spécifique de moyenne portée avec des concentrateurs répartis de manière appropriée ou encore d'un réseau radiofréquence à courte portée connecté par exemple à une box Internet chez le client, ou à des concentrateurs spécifiques de proximité ou encore à des points d'accès standards télécom de type « Femtocellule ».

Dans cette perspective, les solutions techniques de l'invention reposent sur une source d'énergie électrique unique 4 dont le cout peut être connu et géré ainsi que sur des moyens de comptage permettant à l'opérateur concerné de facturer le service de fourniture d'eau chaude. La manière la plus précise de facturer est de le faire en unité d'énergie, par exemple en kWh, délivrée sous forme d'eau chaude pour que le prix intègre à la fois le volume d'eau chaude consommée au cours d'une période donnée mais aussi la température à laquelle l'eau chaude a été fournie. Ceci nécessite par exemple l'ajout d'un compteur volumétrique 21, de préférence installé sur l'arrivée d'eau froide pour accroitre la longévité du matériel, et de deux sondes de température 22 placées à proximité de l'entrée d'eau froide et de la sortie d'eau chaude. Le microcontrôleur compris dans le dispositif selon l'invention 1 calcule l'énergie thermique extraite du stock à partir des informations issues des sondes de température et de celles reçues de la sortie impulsionnelle du compteur volumétrique. La quantité d'eau extraite comptabilisée sur le période de facturation par le dispositif est avantageusement transmise au système d'information de l'opérateur pour être déduite de la consommation d'eau froide générale du client qui est comptabilisée en tête de son réseau hydraulique et relevée par ailleurs.

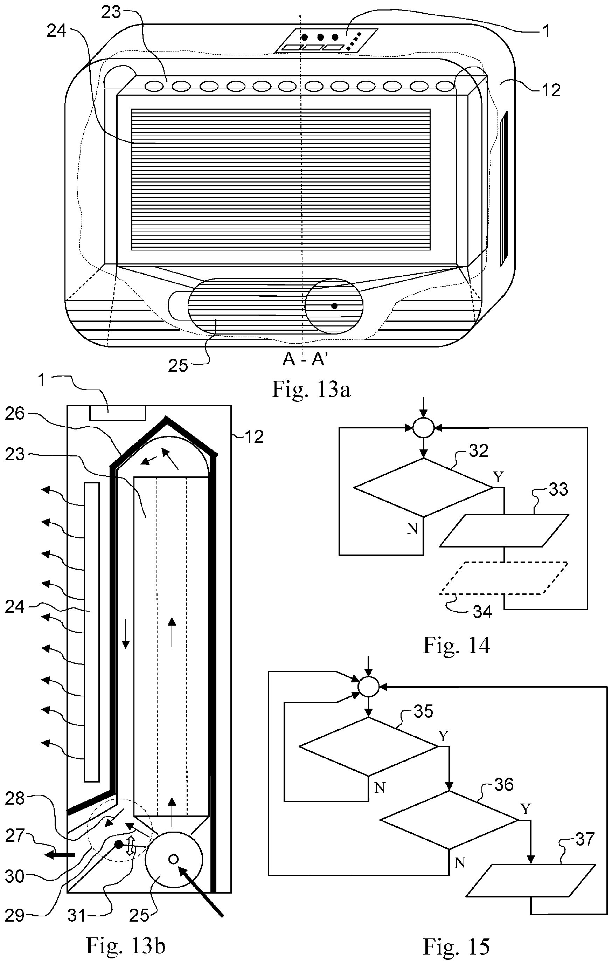

Les **figures 13a et 13b** illustrent une variante de chauffage électrique intégré. La figure 13a représente la vue de face de l'appareil et la figure 13b une coupe transversale de ce même appareil selon l'axe A-A'. Cette variante de système selon l'invention est un convecteur électrique 12 disposant à la fois d'une capacité d'accumulation d'énergie thermique 23 en vue d'une restitution de chaleur en temps différé et de moyens de production de chaleur immédiate 24. Cette variante est particulièrement avantageuse en ce que l'utilisateur bénéficie ainsi d'un service de chauffage continu si nécessaire et sans inertie perceptible. En effet, le dispositif selon l'invention 1 est agencé pour chauffer avec les moyens à production de chaleur immédiate lorsque la chaleur précédemment stockée a été consommée et qu'il est encore nécessaire de chauffer la pièce. Compte tenu du faible encombrement d'un convecteur standard dont il est souhaitable de se rapprocher, le stockage d'une grande quantité d'énergie thermique requière l'utilisation de matériau à changement de phase à haute température de fusion, par exemple comprise entre 250 et 350 °C. A de telles températures, seul un chauffage électrique par effet Joule est techniquement approprié, par exemple mis en œuvre sous la forme d'au moins une résistance blindée dans une gaine en inox qui est immergée dans le matériau à changement de phase. La chaleur stockée est extraite de manière active par l'intermédiaire d'un ventilateur centrifuge 25 piloté par le dispositif 1. Le circuit emprunté par le flux d'air est étudié pour supprimer toute fuite de chaleur par convection lorsque le ventilateur d'extraction est arrêté. Le sous-ensemble de stockage thermique à haute température est fixé dans la carcasse de l'appareil de manière à éviter les fuites de chaleur par ponts thermiques et est entièrement isolé par des matériaux 26 appropriés aux températures. Le flux d'air résultant 27 doit avoir une température relativement basse pour des raisons de confort et de sécurité des personnes. Produire un flux d'air résultant à la sortie de l'appareil qui soit à la température adéquate, à partir d'un air chauffé à haute température 28 au contact de l'enveloppe du matériau à changement de phase requière son mélange à un flux d'air à température ambiante 29. Il est ainsi prévu une chambre de mélange 30 qui comprend en outre avantageusement des moyens de réglage du mélange, tels qu'un volet 31, dont la position est asservie pour réguler la température du flux d'air 27 résultant du mélange.

Les solutions présentées dans cet exemple de mise en œuvre sont en grande partie transposables aux cas du climatiseur et à celui des centrales de ventilation à accumulation d'énergie thermique, qu'il s'agisse d'une capacité à stocker de chaleur ou du froid selon les variantes d'appareils.

La **figure 14** illustre les étapes du procédé pour produire des actions permettant l'exploitation de l'invention sous l'angle de l'équilibrage de la production et de la demande d'énergie dans un réseau électrique en agissant sur la demande.

Dans le cadre de la surveillance continue de l'équilibre entre l'énergie produite et l'énergie consommée au sein d'un réseau d'électricité, l'énergie produite est continûment comparée 32 à l'énergie consommée. Si la quantité d'énergie produite excède la quantité d'énergie consommée (résultat Y au test 32) alors les moyens de surveillance et de gestion du réseau électrique transmettent 33, à une pluralité de systèmes selon l'invention disséminés dans le réseau, une consigne de consommation d'une quantité prédéterminée d'énergie de sorte à ajuster la quantité d'énergie consommée à la quantité d'énergie produite dans le réseau.

Préalablement à la transmission des ordres de télécommande aux systèmes selon l'invention appropriés, les moyens de surveillance et de gestion du réseau électrique calculent le cumul de consommation additionnelle d'énergie qu'il faut commander pour équilibrer le réseau, il correspond sensiblement à la différence entre le cumul de l'énergie produite et le cumul de l'énergie consommée au sein du réseau. Les moyens de surveillance et de gestion du réseau électrique déterminent, par des requêtes dans une base de données où sont identifiés les systèmes selon l'invention, le compte client correspondant, leur adresse dans le réseau de télécommunication auquel est adossé le réseau électrique pour pouvoir les télécommander, le cas échéant leur capacité de stockage énergétique unitaire nominale et/ou résiduelle si le réseau de télécommunication est bidirectionnel, la puissance nominale de la charge électrique impliquée dans la transformation de l'énergie électrique en énergie thermique en vue de son stockage, et par l'exécution d'algorithmes appropriés tenant compte des possibilités d'adressage dans le réseau de télécommunication pour télécommander les systèmes selon l'invention pertinents. Une étape additionnelle 34 est prévue dans le procédé pour inscrire dans une base de données l'évènement que constitue le fait qu'un système selon l'invention déterminé, associé à un compte client ait reçu à une date et à une heure donnée un ordre de télécommande pour consommer une quantité d'énergie électrique prédéterminée. Cette étape 34 a pour objet la mémorisation d'informations utilisables ultérieurement dans le cadre de l'exploitation de l'invention sous l'angle économique.

L'invention prévoit en outre que soit mis en œuvre dans les mêmes appareils et dans les mêmes systèmes de gestion associés, des moyens pour délester les charges de puissance pilotées dans le cas où il apparaitrait que la demande d'énergie dans le réseau électrique excèderait la production. Le coût marginal de cet ajout fonctionnel est quasi-nul en ce qu'il repose sur l'utilisation des mêmes moyens physique que l'invention, que seul les logiciels embarqués dans les dispositifs 1 et dans les systèmes de gestion associés sont à modifier en conséquence.

La **figure 15** illustre les étapes du procédé pour produire des informations permettant l'exploitation de l'invention sous l'angle économique.

Lorsqu'une facture doit être produite (résultat Y au test 35) pour un client donné au titre d'une période de consommation donnée, est explorée une base de données où sont mémorisés les événements horodatés que sont la transmission d'ordres de télécommande pour consommer une quantité prédéterminée d'énergie électrique selon l'invention. Si cette exploration de la base de donnée fait ressortir des événements résultant de la mise en œuvre de l'invention pour le client donné sur la période de consommation donnée (résultat Y au test 36) alors des traitements 37 sont exécutés pour corriger de manière appropriée la facturation compte tenu du fait que lesdits évènements ont engendré des consommations d'énergie qui ont été comptées dans au moins un index associé à des conditions tarifaires données. Ainsi les effets économiques, selon les conditions tarifaires générales applicables pendant la période de consommation d'intérêt, qui résultent de la mise en œuvre de l'invention peuvent être effacés et remplacés par d'autres, ces effets économiques étant déterminés par l'application de conditions tarifaires spécifiquement applicables aux consommations énergétiques résultant de la mise en œuvre de l'invention. Il est aussi prévu, le cas échéant, de corriger de manière appropriée la facturation de la consommation d'eau froide dans le cadre d'un service de fourniture d'eau chaude.

Bien entendu, l'invention n'est pas limitée aux exemples qui viennent d'être décrits et de nombreux aménagements peuvent y être apportés sans sortir du cadre de l'invention, notamment en combinant plusieurs variantes dans la même mise en œuvre ou en combinant différemment des éléments pris dans plusieurs exemples.

## Revendications

1. Dispositif (1) pour piloter au moins un sous-ensemble apte à transformer de l'énergie électrique (2) et à la stocker sous forme thermique comprenant une interface de puissance (7) et/ou des moyens de contrôle (8) pour piloter au moins une charge électrique de puissance, un sous-ensemble de communication (6) pour recevoir au moins une consigne dont la réception déclenche la fourniture à l'au moins un sous-ensemble apte à transformer de l'énergie électrique (2) et à la stocker sous forme thermique, d'une quantité d'énergie électrique provenant d'une installation terminale d'un réseau électrique comprenant un compteur d'énergie électrique derrière lequel le dispositif est raccordé, le dispositif étant **caractérisé en ce que** la réception de l'au moins une consigne conditionne le début de la fourniture d'énergie électrique à l'au moins une charge de puissance, l'arrêt de la fourniture d'énergie étant géré localement par le dispositif lorsqu'une quantité d'énergie électrique prédéterminée a été consommée.

2. Dispositif selon la revendication 1, **caractérisé en ce que** la quantité d'énergie électrique fournie à l'au moins un sous-ensemble apte à transformer de l'énergie électrique et à la stocker sous forme thermique, est estimée à partir de la mesure du temps pendant lequel l'énergie électrique est fournie à une puissance prédéterminée, à l'au moins un sous-ensemble apte à transformer de l'énergie électrique et à la stocker sous forme thermique.

3. Dispositif selon la revendication 2, caractérisé en ce l'estimation de la quantité d'énergie électrique fournie à l'au moins un sous-ensemble apte à transformer de l'énergie électrique et à la stocker sous forme thermique tient compte de la tension d'alimentation de l'au moins une charge électrique de puissance.

4. Dispositif selon la revendication 1, **caractérisé en ce que** la quantité d'énergie électrique fournie à l'au moins un sous-ensemble apte à transformer de l'énergie électrique et à la stocker sous forme thermique est calculée à partir de la mesure de la puissance consommée par ledit sous-ensemble apte à transformer de l'énergie électrique et à la stocker sous forme thermique, pendant le temps durant lequel l'énergie électrique lui est fournie.

5. Dispositif selon l'une quelconque des revendications précédentes, **caractérisé en ce qu'**il comprend, des premiers moyens pour piloter des premiers moyens pour transformer l'énergie électrique sous forme thermique par effet joule, et des seconds moyens pour piloter des seconds moyens pour transformer l'énergie électrique sous forme thermique, lesdits premiers moyens pour transformer l'énergie électrique sous forme thermique ayant une puissance électrique supérieure auxdits seconds moyens, lesdits premier et second moyens étant pilotable séparément et/ou conjointement.

6. Dispositif selon l'une quelconque des revendications précédentes, **caractérisé en ce qu'**il est agencé en outre pour recevoir et interpréter de manière appropriée au moins une autre consigne différente de l'au moins une consigne pour déclencher la fourniture d'une quantité prédéterminée d'énergie électrique.

7. Dispositif selon l'une quelconque des revendications précédentes, **caractérisé en ce qu'**il comprend en outre des moyens pour recevoir au moins une information transmise par ledit compteur d'énergie électrique derrière lequel il est raccordé.

8. Dispositif selon l'une quelconque des revendications précédentes, **caractérisé en ce qu'**il comprend en outre des moyens pour déterminer la quantité d'énergie extraite de l'au moins un sous-ensemble apte à transformer de l'énergie électrique et à la stocker sous forme thermique lors de son utilisation.

9. Dispositif selon l'une quelconque des revendications précédentes, **caractérisé en ce qu'**il comprend en outre des moyens pour recevoir au moins une information en rapport avec le volume d'eau extrait, et/ou avec la température de l'eau extraite, et/ou avec la température de l'eau entrante, de l'au moins un sous-ensemble apte à transformer de l'énergie électrique et à la stocker sous forme thermique lors de son utilisation.

10. Dispositif selon l'une quelconque des revendications précédentes, **caractérisé en ce qu'**il comprend en outre des moyens pour transmettre à un système d'information au moins une information relative à l'état de l'au moins un sous-ensemble apte à transformer de l'énergie électrique et à la stocker sous forme thermique.

11. Système (12) apte à transformer une quantité prédéterminée d'énergie électrique et à la stocker sous forme thermique **caractérisé en ce qu'**il comprend un dispositif de pilotage (1) selon l'une quelconque des revendications 1 à 10 et au moins un sous-ensemble apte à transformer de l'énergie électrique (2) et à la stocker sous forme thermique.

12. Système selon la revendication 11, **caractérisé en ce que** l'au moins un sous-ensemble apte à transformer de l'énergie électrique et à la stocker sous forme thermique comprend des moyens pour transformer de l'énergie électrique sous forme thermique de type thermodynamique et des moyens pour transformer de l'énergie électrique sous forme thermique par effet joule.

13. Système selon l'une quelconque des revendications 11 à 12, **caractérisé en ce que** ledit sous-ensemble apte à transformer de l'énergie électrique et à la stocker sous forme thermique stocke l'énergie sous la forme de chaleur relativement à la température ambiante.

14. Système selon l'une quelconque des revendications 11 à 13, **caractérisé en ce que en ce que** ledit sous-ensemble apte à transformer de l'énergie électrique et à la stocker sous forme thermique stocke l'énergie sous la forme de froid relativement à la température ambiante.

15. Système selon l'une des revendications 11 ou 14, **caractérisé en ce que** l'au moins un sous-ensemble apte à transformer de l'énergie électrique et à la stocker sous forme thermique stocke l'énergie dans un volume de liquide principalement constitué d'eau.

16. Système selon l'une quelconque des revendications 11 à 15, **caractérisé en ce que** l'au moins un sous-ensemble apte à transformer de l'énergie électrique et à la stocker sous forme thermique stocke l'énergie, au moins en partie, dans un volume de matériau massif et/ou à changement de phase.

17. Système selon l'une quelconque des revendications 11 à 16, **caractérisé en ce qu'**il comprend en outre des moyens de comptage de l'énergie sous forme thermique extraite lors de son utilisation.

18. Système selon l'une quelconque des revendications 11 à 17, **caractérisé en ce qu'**au moins une partie de l'énergie sous forme thermique extraite lors de son utilisation l'est par l'intermédiaire d'un courant électrique.

19. Système selon l'une quelconque des revendications 11 à 17, **caractérisé en ce qu'**au moins une partie de l'énergie sous forme thermique extraite lors de son utilisation l'est par l'intermédiaire d'un flux d'air la transportant.

20. Système selon l'une quelconque des revendications 11 à 17, **caractérisé en ce qu'**au moins une partie de l'énergie sous forme thermique extraite lors de son utilisation l'est par l'intermédiaire d'un flux de liquide la transportant.

21. Système l'une quelconque des revendications 19 ou 20, **caractérisé en ce qu'**il comprend en outre des moyens pour fournir un flux d'air (30) ou de liquide (13) à une température différente de la température à laquelle est stockée l'énergie sous forme thermique.

22. Système selon l'une quelconque des revendications 20 ou 21, **caractérisé en ce qu'**il forme un appareil de production d'eau chaude sanitaire à accumulation.

23. Système selon l'une quelconque des revendications 20 à 22, **caractérisé en ce qu'**il comprend en outre un compteur d'eau et/ou des moyens pour mesurer la température de l'eau extraite et/ou des moyens pour mesurer la température de l'eau entrante.

24. Système selon l'une quelconque des revendications 11 à 23, **caractérisé en ce qu'**il forme un appareil de chauffage et/ou de refroidissement à accumulation.

25. Système selon l'une quelconque des revendications 11 à 24, **caractérisé en ce qu'**il est agencé pour offrir au moins deux modalités distinctes de stockage de l'énergie électrique sous forme thermique, au moins une modalité pour un stockage récurrent et au moins une modalité exploitant une réserve de capacité de stockage sous forme thermique pour un stockage occasionnel.

26. Système selon l'une quelconque des revendications 11 à 25, **caractérisé en ce qu'**il comprend en outre des moyens pour contribuer à l'apport d'énergie sous forme thermique qui ne sont pas raccordés au réseau de distribution électrique.

27. Procédé pour exploiter dans un réseau électrique une pluralité de systèmes aptes à transformer une quantité prédéterminée d'énergie électrique et à la stocker sous forme thermique selon l'une quelconque des revendications 11 à 26, **caractérisé en ce qu'**il comprend les étapes de :
- Surveillance continue de l'équilibre entre la consommation et la production d'électricité au sein dudit réseau électrique par un système de supervision et de gestion approprié;
- Transmission par ledit système de supervision et de gestion approprié, à une pluralité déterminée de systèmes selon l'une quelconque des revendications 11 à 26, d'au moins une consigne de transformation et de stockage d'une quantité prédéterminée d'énergie électrique, pour consommer une quantité cumulée d'énergie électrique prédéterminée de sorte à ajuster la consommation d'électricité à la production dans le cas d'une production excédentaire donnée.

28. Procédé selon la revendication 27, **caractérisé en ce qu'**il comprend en outre une étape de :
- Mémorisation dans au moins un système d'information, d'au moins une information en rapport avec la transmission par ledit système de supervision et de gestion approprié, à une pluralité déterminée de systèmes selon l'une quelconque des revendications 11 à 26, d'au moins une consigne de transformation et de stockage d'une quantité prédéterminée d'énergie électrique.

29. Procédé selon la revendication 28, **caractérisé en ce qu'**il comprend en outre une étape de :
- Correction au sein d'au moins un système d'information, d'au moins un chiffre en rapport avec le comptage de l'énergie électrique consommée dans une installation où au moins un système selon l'une quelconque des revendications 11 à 26 est mis en œuvre, lorsque la quantité d'énergie électrique ayant été consommée par ledit système l'a été au moins en partie alors qu'un index de comptage inapproprié était activé dans les moyens de comptage associés à ladite installation.

30. Application du procédé selon les revendications 27 à 29 pour la gestion d'un réseau de distribution d'énergie électrique comprenant des sources d'énergie à production intermittente.

31. Application du procédé selon les revendications 27 à 29 dans le cadre d'un service d'acquisition et de stockage d'énergie électrique produite en excédent.

32. Application du procédé selon les revendications 27 à 29 dans le cadre d'un service de fourniture d'eau chaude sanitaire et/ou de chauffage et/ou de refroidissement et/ou d'électricité.

## Patentansprüche

1. Vorrichtung (1) zur Steuerung mindestens einer Unterbaugruppe, die geeignet ist, elektrische Energie (2) umzuwandeln und sie in thermischer Form zu speichern, die eine Leistungsschnittstelle (7) und/oder Kontrollmittel (8) zur Steuerung mindestens eines elektrischen Leistungsverbrauchers sowie eine Unterbaugruppe zur Kommunikation (6) umfasst, über die mindestens eine Anweisung übermittelt wird, bei deren Eingang für mindestens eine Unterbaugruppe, die geeignet ist, elektrische Energie (2) umzuwandeln und in thermischer Form zu speichern, die Bereitstellung von elektrischer Energie ausgelöst wird, die einem Endpunkt eines Stromversorgungsnetzes entstammt, das einen Zähler für elektrische Energie umfasst, hinter dem die Vorrichtung angeschlossen ist, wobei die Vorrichtung **dadurch gekennzeichnet ist, dass** der Eingang mindestens einer Anweisung den Beginn der Bereitstellung elektrischer Energie für mindestens einen Leistungsverbraucher bedingt, wobei die Beendigung der Energiebereitstellung lokal von der Vorrichtung verwaltet wird, sobald eine vorab festgelegte elektrische Energiemenge verbraucht wurde.

2. Vorrichtung nach Anspruch 1, die **dadurch gekennzeichnet ist, dass** die Abschätzung der Menge an elektrischer Energie, die mindestens einer Unterbaugruppe, die in der Lage ist, elektrische Energie umzuwandeln und in thermischer Form zu speichern, bereitgestellt wird, anhand der gemessenen Zeit erfolgt, während der die elektrische Energie mit einer vorab festgelegten Leistung mindestens einer Unterbaugruppe bereitgestellt wird, die in der Lage ist, die elektrische Energie umzuwandeln und in thermischer Form zu speichern.

3. Vorrichtung nach Anspruch 2, die **dadurch gekennzeichnet ist, dass** die Abschätzung der Menge an elektrischer Energie, die mindestens einer Unterbaugruppe bereitgestellt wird, die geeignet ist, elektrische Energie umzuwandeln und in thermischer Form zu speichern, unter Berücksichtigung der Versorgungsspannung mindestens eines elektrischen Leistungsverbrauchers erfolgt.

4. Vorrichtung nach Anspruch 1, die **dadurch gekennzeichnet ist, dass** die mindestens für eine Unterbaugruppe, die geeignet ist, elektrische Energie umzuwandeln und in thermischer Form zu speichern, bereitgestellte Menge an elektrischer Energie ausgehend vom gemessenen Leistungsverbrauch der genannten Unterbaugruppe, die geeignet ist, elektrisch Energie umzuwandeln und in thermischer Form zu speichern, berechnet wird, und zwar während der Zeit, während der ihr elektrische Energie bereitgestellt wird.

5. Vorrichtung nach einem der vorausgehenden Ansprüche, die **dadurch gekennzeichnet ist, dass** sie die ersten Mittel zur Steuerung der ersten Mittel zur Umwandlung der elektrischen Energie durch den Jouleschen Effekt in thermische Form sowie die zweiten Mittel zur Steuerung der zweiten Mittel zur Umwandlung der elektrischen Energie in thermische Form umfasst, wobei die genannten ersten Mittel zur Umwandlung elektrischer Energie in thermische Form eine höhere elektrische Leistung aufweisen als die genannten zweiten Mittel und die genannten ersten und zweiten Mittel getrennt und/oder gemeinsam gesteuert werden können.

6. Vorrichtung nach einem der vorausgehenden Ansprüche, die **dadurch gekennzeichnet ist, dass** sie ferner so ausgelegt ist, dass sie in geeigneter Weise mindestens eine andere Anweisung empfangen und interpretieren kann, die sich von mindestens einer Anweisung zur Auslösung der Bereitstellung einer vorab festgelegten Menge an elektrischer Energie unterscheidet.

7. Vorrichtung nach einem der vorausgehenden Ansprüche, die **dadurch gekennzeichnet ist, dass** sie ferner Mittel umfasst, die es ihr erlauben, mindestens eine Informationen zu empfangen, die vom genannten Zähler für elektrische Energie, hinter dem sie angeschlossen ist, übermittelt wird.

8. Vorrichtung nach einem der vorausgehenden Ansprüche, die **dadurch gekennzeichnet ist, dass** sie ferner Mittel umfasst, um die Energiemenge zu bestimmen, die während der Nutzung mindestens einer Unterbaugruppe entzogen wird, die in der Lage ist, elektrische Energie umzuwandeln und in thermischer Form zu speichern.

9. Vorrichtung nach einem der vorausgehenden Ansprüche, die **dadurch gekennzeichnet ist, dass** sie ferner Mittel umfasst, um während der Nutzung mindestens eine Information bezüglich des entzogenen Wasservolumens und/oder der Temperatur des entzogenen Wassers und/oder der Temperatur des zufließenden Wassers mindestens einer Unterbaugruppe zu empfangen, die in der Lage ist, elektrische Energie umzuwandeln und in thermischer Form zu speichern.

10. Vorrichtung nach einem der vorausgehenden Ansprüche, die **dadurch gekennzeichnet ist, dass** sie ferner Mittel umfasst, um an ein Informationssystem mindestens eine Information bezüglich des Zustands mindestens einer Unterbaugruppe zu übertragen, die geeignet ist, elektrische Energie umzuwandeln und in thermischer Form zu speichern.

11. System (12), das geeignet ist, eine vorab festgelegte Menge an elektrischer Energie umzuwandeln und in thermischer Form zu speichern, das **dadurch gekennzeichnet ist, dass** es eine Steuervorrichtung (1) nach einem der Ansprüche 1 bis 10 und mindestens eine Unterbaugruppe umfasst, die geeignet ist, elektrische Energie (2) umzuwandeln und in thermischer Form zu speichern.

12. System nach Anspruch 11, das **dadurch gekennzeichnet ist, dass** mindestens eine Unterbaugruppe, die geeignet ist, elektrische Energie umzuwandeln und in thermischer Form zu speichern, thermodynamische Mittel umfasst, um die elektrische Energie in thermische Form umzuwandeln sowie die Mittel, um elektrische Energie durch den Jouleschen Effekt in thermische Form umzuwandeln.

13. System nach einem der Ansprüche 11 bis 12, das **dadurch gekennzeichnet ist, dass** die genannte Unterbaugruppe, die geeignet ist, elektrische Energie umzuwandeln und in thermischer Form zu speichern, die Energie in Form von Wärme gegenüber der Umgebungstemperatur speichert.

14. System nach einem der Ansprüche 11 bis 13, das **dadurch gekennzeichnet ist, dass** die genannte Unterbaugruppe, die geeignet ist, elektrische Energie umzuwandeln und in thermischer Form zu speichern, die Energie in Form von Kälte gegenüber der Umgebungstemperatur speichert.

15. System nach einem der Ansprüche 11 bis 14, das **dadurch gekennzeichnet ist, dass** mindestens eine Unterbaugruppe, die geeignet ist, elektrische Energie umzuwandeln und in thermischer Form zu speichern, die Energie in einem Flüssigkeitsvolumen speichert, das hauptsächlich aus Wasser besteht.

16. System nach einem der Ansprüche 11 bis 15, das **dadurch gekennzeichnet ist, dass** mindestens eine Unterbaugruppe, die geeignet ist, elektrische Energie umzuwandeln und in thermischer Form zu speichern, die Energie zumindest teilweise in einem Volumen aus massiven und/oder Phasenänderungsmaterial speichert.

17. System nach einem der Ansprüche 11 bis 16, das **dadurch gekennzeichnet ist, dass** es ferner Mittel zur Zählung der bei der Nutzung in thermischer Form entzogenen Energie umfasst.

18. System nach einem der Ansprüche 11 bis 17, das **dadurch gekennzeichnet ist, dass** mindestens ein Teil der bei seiner Nutzung entzogenen thermischen Energie über einen elektrischen Strom entzogen wird.

19. System nach einem der Ansprüche 11 bis 17, das **dadurch gekennzeichnet ist, dass** mindestens ein Teil der bei seiner Nutzung entzogenen thermischen Energie über einen Luftstrom entzogen wird, der die Energie transportiert.

20. System nach einem der Ansprüche 11 bis 17, das **dadurch gekennzeichnet ist, dass** mindestens ein Teil der bei seiner Nutzung entzogenen thermischen Energie über einen Flüssigkeitsstrom entzogen wird, der die Energie transportiert.

21. System nach einem der Ansprüche 19 oder 20, das **dadurch gekennzeichnet ist, dass** es ferner Mittel zur Bereitstellung eines Luftstroms (30) oder eines Flüssigkeitsstroms (13) umfasst, dessen Temperatur von der Temperatur der in thermischer Form gespeicherten Energie abweicht.

22. System nach einem der Ansprüche 20 oder 21, das **dadurch gekennzeichnet ist, dass** es ein Speichergerät zur Erzeugung von warmem Brauchwasser bildet

23. System nach einem der Ansprüche 20 bis 22, das **dadurch gekennzeichnet ist, dass** es ferner einen Wasserzähler und/oder Mittel zur Temperaturmessung des entnommenen Wassers und/oder Mittel zur Temperaturmessung des zufließenden Wassers umfasst.

24. System nach einem der Ansprüche 11 bis 23, das **dadurch gekennzeichnet ist, dass** es ein Speichergerät zum Heizen und/oder Kühlen bildet

25. System nach einem der Ansprüche 11 bis 24, das **dadurch gekennzeichnet ist, dass** es durch seine Auslegung mindestens zwei getrennte Speichermodalitäten für elektrische Energie in thermischer Form bietet, mindestens eine Modalität für die wiederholte Speicherung und mindestens eine Modalität zur Nutzung einer Reservespeicherkapazität in thermischer Form für gelegentliche Speicherung.

26. System nach einem der Ansprüche 11 bis 25, das **dadurch gekennzeichnet ist, dass** es ferner Mittel umfasst, die zur Zuführung von Energie in thermischer Form beitragen und die nicht am elektrischen Verteilungsnetz angeschlossen sind.

27. Verfahren zur Nutzung einer Vielzahl von Systemen nach einem der Ansprüche 11 bis 26, die geeignet sind, eine vorab festgelegte Menge an elektrischer Energie umzuwandeln und in thermischer Form zu speichern, innerhalb eines elektrischen Netzwerks, das **dadurch gekennzeichnet ist, dass** es folgende Schritte umfasst:
- Kontinuierliche Überwachung des Gleichgewichts zwischen dem Verbrauch und der Erzeugung von Elektrizität innerhalb des genannten elektrischen Netzwerks über ein geeignetes Überwachungs- und Verwaltungssystem;
- Übertragung durch das genannte geeignete Überwachungs- und Verwaltungssystem mindestens einer Anweisung zur Umwandlung und Speicherung einer vorab festgelegten Menge an elektrischer Energie an eine festgelegte Vielzahl von Systemen nach einem der Ansprüche 11 bis 26, um eine vorab festgelegte angesammelte Menge an elektrischer Energie zu verbrauchen, um im Falle einer gegebenen Überschusserzeugung den Verbrauch an Elektrizität an die Erzeugung anzupassen.

28. Verfahren nach Anspruch 27, das **dadurch gekennzeichnet ist, dass** es ferner folgenden Schritt umfasst:
- Speicherung mindestens einer Information bezüglich der Übertragung mindestens einer Anweisung zur Umwandlung und Speicherung einer vorab festgelegten Menge an elektrischer Energie durch das genannte Überwachungs- und Verwaltungssystem an eine festgelegte Vielzahl von Systemen nach einem der Ansprüche 11 bis 26 in mindestens einem Informationssystem.

29. Verfahren nach Anspruch 28, das **dadurch gekennzeichnet ist, dass** es ferner folgenden Schritt umfasst:
- Korrektur mindestens einer Ziffer bezüglich der Zählung der in einer Anlage, in der mindestens ein System nach einem der Ansprüche 11 bis 26 zur Anwendung kommt, verbrauchten elektrischen Energie innerhalb mindestens eines Informationssystems, sobald die Menge an vom genannten System verbrauchter elektrischer Energie zumindest teilweise dann verbraucht wurde, während in den der genannten Anlage zugeordneten Zählmitteln ein ungeeigneter Zählindex aktiviert war.

30. Anwendung des Verfahrens nach den Ansprüchen 27 bis 29 für die Verwaltung eines Verteilungsnetzwerks für elektrische Energie, das diskontinuierlich erzeugende Energiequellen umfasst.

31. Anwendung des Verfahrens nach den Ansprüchen 27 bis 29 im Rahmen eines Dienstes zur Beschaffung und Lagerung überschüssig erzeugter elektrischer Energie.

32. Anwendung des Verfahrens nach den Ansprüchen 27 bis 29 im Rahmen eines Dienstes zur Bereitstellung von warmem Brauchwasser und/oder von Heizwärme und/oder von Kühlung und/oder von Elektrizität.

## Claims

1. Device (1) for controlling at least one sub-assembly capable of transforming electrical energy (2) and of storing it in thermal form comprising a power interface (7) and/or control means (8) for controlling at least one electrical power load, a communication sub-assembly (6) for receiving at least one instruction, the reception of which triggers the supply to the at least one sub-assembly capable of transforming electrical energy (2) and to store it in thermal form, of a quantity of electrical energy originating from a terminal installation of an electrical network comprising an electrical energy meter behind which the device is connected, the device being **characterized in that** the reception of the at least one setpoint conditions the start of the supply of electrical energy to the at least one power load, the stopping of the supply of energy being managed locally by the device when a predetermined quantity of electrical energy has been consumed.

2. Device according to Claim 1, **characterized in that** the quantity of electrical energy supplied to the at least one sub-assembly capable of transforming electrical energy and of storing it in thermal form, is estimated from the measurement of time during which electrical energy is supplied at a predetermined power, to the at least one sub-assembly capable of transforming electrical energy and of storing it in thermal form.

3. Device according to Claim 2, **characterized in that** the estimate of the quantity of electrical energy supplied to the at least one sub-assembly capable of transforming electrical energy and of storing it in thermal form takes into account the supply voltage of the at least one electric power load.

4. Device according to Claim 1, **characterized in that** the quantity of electrical energy supplied to the at least one sub-assembly capable of transforming electrical energy and of storing it in thermal form is calculated from the measurement of the power consumed by said sub-assembly capable of transforming electrical energy and storing it in thermal form, during the time during which the electrical energy is supplied to it.

5. Device according to any one of the preceding claims, **characterized in that** it comprises first means for controlling first means for transforming electrical energy into thermal form by the Joule effect, and second means for controlling second means for transforming electrical energy in thermal form, said first means for transforming electrical energy in thermal form having an electrical power greater than said second means, said first and second means being controllable separately and/or jointly.

6. Device according to any one of the preceding claims, **characterized in that** it is furthermore arranged to receive and appropriately interpret at least one other instruction different from the at least one instruction in order to trigger the supply of a predetermined quantity of electric energy.

7. Device according to any one of the preceding claims, **characterized in that** it further comprises means for receiving at least one information transmitted by said electric energy meter behind which it is connected.

8. Device according to any one of the preceding claims, **characterized in that** it further comprises means for determining the quantity of energy extracted from the at least one sub-assembly capable of transforming electrical energy and of storing it in thermal form during its use.

9. Device according to any one of the preceding claims, **characterized in that** it further comprises means for receiving at least one item of information relating to the volume of water extracted, and/or with the temperature of the water extracted, and/or with the temperature of the incoming water, of at least one sub-assembly capable of transforming electrical energy and of storing it in thermal form during its use.

10. Device according to any one of the preceding claims, **characterized in that** it further comprises means for transmitting to an information system at least one piece of information relating to the state of the at least one sub-assembly capable of transforming of electrical energy and to store it in thermal form.

11. System (12) capable of transforming a predetermined quantity of electrical energy and of storing it in thermal form, **characterized in that** it comprises a control device (1) according to any one of claims 1 to 10 and at least one sub-assembly capable of transforming electrical energy (2) and storing it in thermal form.

12. System according to Claim 11, **characterized in that** the at least one sub-assembly capable of transforming electrical energy and of storing it in thermal form comprises means for transforming electrical energy in thermal form of the thermodynamic type and means for transforming electrical energy into thermal form by the Joule effect.

13. System according to any one of claims 11 to 12, **characterized in that** said sub-assembly capable of transforming electrical energy and storing it in thermal form stores energy in the form of heat relative to the ambient temperature.

14. System according to any one of Claims 11 to 13, **characterized in that in that** the said sub-assembly capable of transforming electrical energy and of storing it in thermal form stores the energy in the form of cold relative to the ambient temperature.

15. System according to one of Claims 11 or 14, **characterized in that** the at least one sub-assembly capable of transforming electrical energy and of storing it in thermal form stores the energy in a volume of liquid mainly consisting of water.

16. System according to any one of Claims 11 to 15, **characterized in that** the at least one sub-assembly capable of transforming electrical energy and of storing it in thermal form stores the energy, at least in part, in a volume of massive material and/or phase change.

17. System according to any one of claims 11 to 16, **characterized in that** it further comprises means for counting the energy in thermal form extracted during its use.

18. System according to any one of claims 11 to 17, **characterized in that** at least part of the energy in thermal form extracted during its use is through an electric current.

19. System according to any one of claims 11 to 17, **characterized in that** at least part of the energy in thermal form extracted during its use is via an air flow carrying it.

20. System according to any one of claims 11 to 17, **characterized in that** at least part of the energy in thermal form extracted during its use is via a flow of liquid carrying it.

21. System according to any one of claims 19 or 20, **characterized in that** it further comprises means for providing a flow of air (30) or liquid (13) at a temperature different from the temperature at which is stored energy in thermal form.

22. A system according to any one of claims 20 or 21, **characterized in that** it forms a domestic hot water storage appliance.

23. System according to any one of claims 20 to 22, **characterized in that** it further comprises a water meter and/or means for measuring the temperature of the water extracted and/or means for measuring the temperature of incoming water.

24. System according to any one of claims 11 to 23, **characterized in that** it forms a storage heating and/or cooling device.

25. System according to any one of Claims 11 to 24, **characterized in that** it is arranged to offer at least two distinct methods of storing electrical energy in thermal form, at least one modality for recurrent storage and at least one modality using a reserve of storage capacity in thermal form for occasional storage.

26. System according to any one of claims 11 to 25, **characterized in that** it further comprises means for contributing to the supply of energy in thermal form which are not connected to the electrical distribution network.

27. Method for operating in an electrical network a plurality of systems capable of transforming a predetermined quantity of electrical energy and of storing it in thermal form according to any one of claims 11 to 26, **characterized in that** it comprises the steps of:
- continuous monitoring of the balance between consumption and production of electricity within said electricity network by an appropriate supervision and management system;
- transmission by said appropriate supervision and management system, to a determined plurality of systems according to any one of claims 11 to 26, of at least one instruction for transformation and storage of a predetermined quantity of electrical energy, to consume a cumulative amount of predetermined electrical energy so as to adjust the electricity consumption to production in the case of a given excess production.

28. Method according to claim 27, **characterized in that** it further comprises a step of:
- storage in at least one information system, of at least one item of information relating to the transmission by said appropriate supervision and management system, to a determined plurality of systems according to any one of claims 11 to 26, of at least one setpoint for transformation and storage of a predetermined quantity of electrical energy.

29. Method according to claim 28, **characterized in that** it further comprises a step of:
- Correction within at least one information system, of at least one figure related to the metering of the electrical energy consumed in an installation where at least one system according to any one of claims 11 to 26 is placed in operation, when the quantity of electrical energy having been consumed by said system has been at least partly consumed when an inappropriate counting index was activated in the counting means associated with said installation.

30. Use of the method according to Claims 27 to 29 for the management of an electrical energy distribution network comprising energy sources with intermittent production.

31. Use of the method according to claims 27 to 29 as part of a service for the acquisition and storage of excess electrical energy produced.

32. Use of the method according to claims 27 to 29 in the context of a service of supply of domestic hot water and/or heating and/or cooling and/or electricity.
